# EUROPÄISCHE PATENTANMELDUNG

(11) **EP 4 492 663 A1**
(43) Veröffentlichungstag der Anmeldung: **15.01.2025**
(21) Anmeldenummer: 24181114.0
(22) Anmeldetag: 10.06.2024
(51) Int. Cl.: H02M 1/14, H02M 1/15, H02M 7/483, H02M 7/5387, H02M 1/12, H02M 1/32, H02M 1/00, H02M 3/158, B60L 3/00, B60L 50/53

(54) **SAUGKREISANORDNUNG FÜR EINEN TRAKTIONSUMRICHTER EINES SCHIENENFAHRZEUGS**

(30) Priorität: 11.07.2023 DE 102023206584
(71) Anmelder: Siemens Mobility GmbH, 81739 München (DE)
(72) Erfinder: Schönewolf, Stefan Hans Werner, 90431 Nürnberg (DE)
(74) Vertreter: Siemens Patent Attorneys

(57) **Zusammenfassung**

Eine erfindungsgemäße Saugkreisanordnung für einen Traktionsumrichter eines Schienenfahrzeugs, wobei der Traktionsumrichter zumindest einen netzseitigen ersten Stromrichter, zumindest einen lastseitigen zweiten Stromrichter, einen den zumindest einen ersten Stromrichter und den zumindest einen zweiten Stromrichter verbindenden Gleichspannungszwischenkreis mit einem ersten und einem zweiten Spannungspotenzial, sowie zumindest eine in dem Gleichspannungszwischenkreis angeordnete Zwischenkreiskapazität aufweist, ist dadurch gekennzeichnet, dass die in dem Gleichspannungszwischenkreis angeordnete und parallel zu der zumindest einen Zwischenkreiskapazität geschaltete Saugkreisanordnung zumindest eine Schaltanordnung umfassend zumindest eine Schalteinheit und zumindest eine Induktivität, wobei jede Schalteinheit zwei Anschlüsse, zumindest zwei steuerbare Leistungshalbleiterschalter und zumindest eine Schalteinheitskapazität umfasst und ausgestaltet ist, abhängig von Schaltstellungen der Leistungshalbleiterschalter zumindest zwei unterschiedliche Spannungen an den Anschlüssen bereitzustellen, und wobei die zumindest eine Induktivität mit zumindest einer Schalteinheit in Serie geschaltet ist, zumindest einen kapazitiven Energiespeicher, wobei der zumindest eine kapazitive Energiespeicher mit der zumindest einen Schaltanordnung in Serie geschaltet ist, und eine Steuereinrichtung, wobei die Steuereinrichtung ausgestaltet ist, zumindest die Leistungshalbleiterschalter der zumindest einen Schalteinheit zu steuern, umfasst.

## Beschreibung

Die Erfindung betrifft einen Saugkreisanordnung für einen Traktionsumrichter eines Schienenfahrzeugs, wobei das Schienenfahrzeug insbesondere als ein Triebzug für eine Fahrgastbeförderung oder als eine Lokomotive ausgestaltet sein kann.

An Wechselspannungs-Versorgungsnetze für die Speisung von Schienenfahrzeugen mit elektrischer Energie liegt insbesondere in Europa eine Einphasen-Wechselspannung von 15 kV bei 16,7 Hz, oder 25 kV bei 50 Hz, an. Ein Schienenfahrzeug ist mittels einem oder mehreren Stromabnehmern mit üblicherweise Oberleitungen des Versorgungsnetzes verbindbar. Mit dem Stromabnehmer sind ein oder mehrere Primärwicklungen eines Traktionstransformators verbunden, an welchen die Einphasen-Wechselspannung des Versorgungsnetzes anliegt. An einer oder mehreren Sekundärwicklungen des Traktionstransformators liegt eine abhängig von der gewählten Übersetzung niedrigere Einphasen-Wechselspannung an. Mit der einen oder den mehreren Sekundärwicklungen ist ein Traktionsumrichter des Schienenfahrzeugs verbunden. Dieser umfasst einen oder mehrere netzseitige Stromrichter, welche üblicherweise als Vierquadrantensteller (4QS) und damit rückspeisefähig ausgestaltet sind. Dieser eine oder die mehreren netzseitigen Stromrichter wandeln die von dem Traktionstransformator bereitgestellte Einphasen-Wechselspannung in eine Gleichspannung für einen Gleichspannungszwischenkreis des Traktionsumrichters. In dem Gleichspannungszwischenkreis ist eine Zwischenkreiskapazität bestehend aus einem oder mehreren parallel geschalteten Kondensatoren als Energiespeicher angeordnet. Mit dem Gleichspannungszwischenkreis ebenfalls verbunden sind ein oder mehrere lastseitige Stromrichter, welche üblicherweise als Pulswechselrichter (PWR) ausgestaltet sind. Die lastseitigen Stromrichter wandeln die von dem Gleichspannungszwischenkreis bereitgestellte Gleichspannung in eine Wechselspannung variabler Höhe und Frequenz, mit welcher jeweils ein oder mehrere Traktionsmotoren versorgt werden. Ebenfalls mit dem Gleichspannungszwischenkreis können weitere Stromrichter für Hilfsbetriebe des Schienenfahrzeugs sowie gegebenenfalls eine oder mehrere Traktionsbatterien verbunden sein.

Die von dem bzw. den netzseitigen Stromrichtern bereitgestellte elektrische Leistung weist neben einem konstanten Anteil einen mit der doppelten Frequenz des Versorgungsnetzes pulsierenden überlagerten Anteil auf. Um insbesondere den lastseitigen Stromrichtern eine konstante Leistung bereitstellen zu können, welche weitgehend frei von diesen pulsierenden Anteilen ist, wird in dem Gleichspannungszwischenkreis des Traktionsumrichters und parallel zu der Zwischenkreiskapazität üblicherweise ein aus passiven Bauelementen aufgebauter Serienschwingkreis als ein so genannter Saugkreis angeordnet. Dieser Serienschwingkreis besteht beispielsweise aus einer Serienschaltung einer Kapazität bzw. eines Kondensators und einer Induktivität bzw. einer Drossel mit geringem ohmschen Widerstand. Eine Resonanzfrequenz des Saugkreises wird auf die doppelte Netzfrequenz, entsprechend 33,4 Hz für das vorstehend genannte 15 kV, 16,7 Hz, Versorgungsnetz bzw. 100 Hz für das 25 kV, 50 Hz, Versorgungsnetz, abgeglichen, sodass die Anteile bei dieser Frequenz über den Saugkreis nahezu vollständig abgeleitet werden. Höherfrequente Anteile wie insbesondere weitere Harmonische der Netzfrequenz sowie Schaltfrequenzen der Stromrichter werden ergänzend mittels der Zwischenkreiskapazität gefiltert. Ein derart mit passiven Bauelementen aufgebauter Saugkreis besitzt insbesondere den Nachteil, dass die eingesetzten Komponenten sowohl schwer, voluminös als auch kostenintensiv sind.

Aufgabe der Erfindung ist es daher, eine Saugkreisanordnung für einen Traktionsumrichter eines Schienenfahrzeugs anzugeben, welche die genannten Nachteile ausräumt. Diese Aufgabe wird durch die Saugkreisanordnung mit den Merkmalen des unabhängigen Patentanspruchs 1 sowie durch das zumindest eine solche Saugkreisanordnung umfassende Schienenfahrzeug gelöst. Jeweilige Weiterbildungen der Erfindung sind in abhängigen Patentansprüchen angegeben.

Die erfindungsgemäße Saugkreisanordnung für einen Traktionsumrichter eines Schienenfahrzeugs, wobei der Traktionsumrichter zumindest einen netzseitigen ersten Stromrichter, zumindest einen lastseitigen zweiten Stromrichter, einen den zumindest einen ersten Stromrichter und den zumindest einen zweiten Stromrichter verbindenden Gleichspannungszwischenkreis mit einem ersten und einem zweiten Spannungspotenzial, sowie zumindest eine in dem Gleichspannungszwischenkreis angeordnete Zwischenkreiskapazität aufweist, ist dadurch gekennzeichnet, dass die in dem Gleichspannungszwischenkreis angeordnete und parallel zu der zumindest einen Zwischenkreiskapazität geschaltete Saugkreisanordnung zumindest eine Schaltanordnung umfassend zumindest eine Schalteinheit und zumindest eine Induktivität, wobei jede Schalteinheit zwei Anschlüsse, zumindest zwei steuerbare Leistungshalbleiterschalter und zumindest eine Schalteinheitskapazität umfasst und ausgestaltet ist, abhängig von Schaltstellungen der Leistungshalbleiterschalter zumindest zwei unterschiedliche Spannungen an den Anschlüssen bereitzustellen, und wobei die zumindest eine Induktivität mit zumindest einer Schalteinheit in Serie geschaltet ist, zumindest einen kapazitiven Energiespeicher, wobei der zumindest eine kapazitive Energiespeicher mit der zumindest einen Schaltanordnung in Serie geschaltet ist, und eine Steuereinrichtung, wobei die Steuereinrichtung ausgestaltet ist, zumindest die Leistungshalbleiterschalter der zumindest einen Schalteinheit zu steuern, umfasst.

Vorteilhaft ermöglicht die deutlich kleinere Induktivität der Schaltordnung der erfindungsgemäßen Saugkreisanordnung eine Verringerung von Verlusten, welche in dem bekannten passiven Saugkreis von der Drossel hervorgerufen werden. Ferner ermöglicht der Einsatz kleinerer und leichterer elektrischer und elektronischer Bauelemente eine vorteilhafte Verringerung des Gewichts sowie des benötigten Volumens im Vergleich zu dem bekannten passiven Saugkreis. Auch ermöglicht die Saugkreisanordnung vorteilhaft einen einfachen Abgleich der Saugkreisanordnung auf die Netzfrequenz des Versorgungsnetzes, wobei ergänzend vorteilhaft die Arbeitsfrequenz der Saugkreisanordnung bei einer Änderungen der Netzfrequenz dynamisch von der Steuereinrichtung nachgeführt werden kann. Speziell bei einem so genannten Mehrsystem-Schienenfahrzeug, welches beispielsweise mit beiden vorstehend genannten Netzspannungen und -frequenzen versorgt werden kann, entfällt ferner vorteilhaft eine bei einem passiven Saugkreis erforderliche Umschalteinrichtung zur Anpassung der Resonanzfrequenz.

Gemäß einer ersten Weiterbildung der Saugkreisanordnung ist ein erster Anschluss jeder Schalteinheit alternativ mit einem zweiten Anschluss einer weiteren Schalteinheit, mit dem ersten Spannungspotenzial des Gleichspannungszwischenkreises, mit der zumindest einen Induktivität der Schaltanordnung oder mit dem kapazitiven Energiespeicher der Saugkreisanordnung verbunden, und ist ein zweiter Anschluss jeder Schalteinheit alternativ mit einem ersten Anschluss einer weiteren Schalteinheit, mit dem zweiten Spannungspotenzial des Gleichspannungszwischenkreises, mit der zumindest einen Induktivität der Schaltanordnung oder mit dem kapazitiven Energiespeicher der Saugkreisanordnung verbunden.

Gemäß einer weiteren Weiterbildung der Saugkreisanordnung umfasst die Schalteinheit zumindest zwei zu einer Halbbrücke verschaltete Leistungshalbleiterschalter und sind die Halbbrücke und die zumindest eine Schalteinheitskapazität parallel geschaltet, und ist der erste Anschluss der Schalteinheit mit einem äußeren Anschluss der Halbbrücke verbunden und ist der zweite Anschluss der Schalteinheit mit einem Mittenanschluss der Halbbrücke verbunden.

Gemäß einer zu der vorstehenden Weiterbildung alternativen weiteren Weiterbildung der Saugkreisanordnung umfasst die Schalteinheit zumindest vier zu einer Vollbrücke verschaltete Leistungshalbleiterschalter, wobei zumindest zwei Leistungshalbleiterschalter zu einer jeweiligen Halbbrücke verschaltet sind, und zwei Halbbrücken sowie die zumindest eine Schalteinheitskapazität parallel geschaltet sind, und ist der erste Anschluss der Schalteinheit mit einem Mittenanschluss der einen der zwei Halbbrücken verbunden und ist der zweite Anschluss der Schalteinheit mit einem Mittenanschluss der anderen der zwei Halbbrücken verbunden.

Gemäß einer weiteren Weiterbildung der Saugkreisanordnung sind zumindest zwei Schaltanordnungen parallel geschaltet, und sind die Schaltanordnungen mit dem zumindest einen kapazitiven Energiespeicher in Serie geschaltet.

Gemäß einer weiteren Weiterbildung der Saugkreisanordnung umfasst die Saugkreisanordnung ferner zumindest eine Schutzeinheit, wobei die zumindest eine Schutzeinheit zu der zumindest einen Schaltanordnung parallel geschaltet ist, und wobei die zumindest eine Schutzeinheit ausgestaltet ist, einen durch die Saugkreisanordnung fließenden Stoßstrom an der zumindest einen Schaltanordnung vorbeizuleiten.

Gemäß einer weiteren Weiterbildung der Saugkreisanordnung umfasst die Saugkreisanordnung ferner zumindest einen Schalter, wobei jeder Schalter zumindest einer Schaltanordnung zugeordnet ist, und wobei jeder Schalter ausgestaltet ist, einen Strompfad durch die zugeordnete Schaltanordnung, insbesondere eine Verbindung mit dem Gleichspannungszwischenkreis oder dem kapazitiven Energiespeicher, zu trennen.

Das erfindungsgemäße Schienenfahrzeug umfasst zumindest eine über zumindest einen Stromabnehmer mit einem Wechselspannungs-Versorgungsnetz verbindbare Traktionstransformationseinrichtung, zumindest einen Traktionsumrichter, welcher zumindest einen netzseitigen ersten Stromrichter, zumindest einen lastseitigen zweiten Stromrichter, einen den zumindest einen ersten Stromrichter und den zumindest einen zweiten Stromrichter verbindenden Gleichspannungszwischenkreis sowie zumindest eine in dem Gleichspannungszwischenkreis angeordnete Zwischenkreiskapazität umfasst, und zumindest einen mit dem zweiten Stromrichter verbundenen Traktionsmotor, und ist dadurch gekennzeichnet, dass in dem Gleichspannungszwischenkreis des jeweiligen Traktionsumrichters eine erfindungsgemäße Saugkreisanordnung angeordnet ist und dass das Schienenfahrzeug ferner eine Steuereinrichtung umfasst, welche ausgestaltet ist, zumindest die Leistungshalbleiter der Saugkreisanordnung zu steuern.

Gemäß einer Weiterbildung des Schienenfahrzeugs ist dieses als ein Triebzug, insbesondere für den Regional- und Fernverkehr, oder als eine Lokomotive ausgestaltet.

Gemäß einer weiteren Weiterbildung des Schienenfahrzeugs sind der zumindest eine netzseitige erste Stromrichter als ein selbstgeführter Pulsstromrichter, insbesondere als ein Vierquadrantensteller, und der zumindest eine lastseitige zweite Stromrichter als ein selbstgeführter Pulsstromrichter, insbesondere als ein Pulswechselrichter, ausgestaltet.

Die erfindungsgemäße Saugkreisanordnung, welche im Unterschied zu dem bekannten passiven Saugkreis auch als aktiver Saugkreis bezeichnet werden kann, umfasst eine Serienschaltung von einer oder mehreren Schalteinheiten, einer oder mehreren Induktivitäten sowie einem oder mehreren kapazitiven Energiespeichern. Parallel zu dieser Serienschaltung können weitere entsprechende Serienschaltungen geschaltet werden, wobei diese beispielweise den einen bzw. die mehreren kapazitiven Energiespeicher gemeinsam nutzen können. Ferner kann die Saugkreisanordnung eine Schutzeinheit zum Vorbeiführen von beispielsweise Stoßströmen an Komponenten der Schalteinheiten und/oder Schalter zum Trennen von Schaltanordnungen von dem Gleichspannungszwischenkreis oder dem kapazitiven Energiespeicher aufweisen, wobei mittels der Schalter insbesondere defekte Schaltanordnungen abgetrennt werden können, um den Betrieb der Saugkreisanordnung mit den verbleibenden Schaltanordnungen fortzusetzen.

Fließt an den Verbindungspunkten der Saugkreisanordnung mit dem Gleichspannungszwischenkreis ein Strom und liegt gleichzeitig eine Spannung an diesen Verbindungspunkten an, so nimmt die Saugkreisanordnung abhängig vom Vorzeichen des Stroms und der Spannung elektrische Energie auf bzw. gibt diese ab. Eine ausgeglichene Energiebilanz wird dabei erfüllt, indem der zumindest eine kapazitive Energiespeicher und/oder die zumindest eine Schalteinheitskapazität und/oder die zumindest eine Induktivität eine entsprechende Energie aufnehmen und abgeben, abzüglich in den Komponenten entstehender Wärmeverluste.

Mittels einer geeigneten Steuerung der Leistungshalbleiterschalter der Schalteinheit bzw. der mehreren Schalteinheiten durch die Steuereinrichtung, insbesondere auf Basis von mittels Sensoren erfasster Messgrößen wie Spannungen an Kapazitäten und/oder Strömen in Induktivitäten, wird der Stromfluss durch die Saugkreisanordnung und damit deren Energieaufnahme und Energieabgabe derart beeinflusst, dass sich eine gewünschte Kompensation pulsierender Energie bzw. Leistung im Gleichspannungszwischenkreis, welche beispielsweise dem einphasigen Versorgungsnetz entstammt, einstellt.

Eine Schalteinheit der erfindungsgemäßen Saugkreisanordnung umfasst beispielsweise eine Halbbrücke mit zumindest zwei Leistungshalbleiterschaltern, wobei die Leistungshalbleiterschalter beispielsweise jeweils als eine Kombination aus einem IGBT (Insulated-Gate Bipolar Transistor) und einer dazu antiparallel geschalteten Diode, jeweils hergestellt aus einen Silizium-Halbleitermaterial (Si), oder als ein MOSFET (Metal Oxide Semiconductor Field-Effect Transistor) mit einer intrinsisch vorhandenen so genannten Body-Diode oder optional als eine Kombination aus einem MOSFET und einer dazu antiparallel geschalteten Schottky-Diode, jeweils hergestellt aus einem Siliziumkarbid-Halbleitermaterial (SiC), ausgestaltet sind. Alternative Halbleitermaterialien wie Galliumnitrid (GaN) oder Diamant, welche ebenso wie Siliziumkarbid eine größere Bandlücke als Silizium aufweisen, können in gleicher Weise für die Herstellung der Leistungshalbleiterschalter sowie gegebenenfalls der Dioden verwendet werden. Bekannte Leistungshalbleiterschalter weisen eine Sperrspannungsfestigkeit von beispielsweise 1,2 kV, 1,7 kV, 2,3 kV, 3,3 kV, 4,5 kV oder 6,5 kV auf.

Die Schalteinheitskapazität einer jeweiligen Schalteinheit kann beispielsweise als ein Kondensator, insbesondere als ein Folien- oder Elektrolyt-Kondensator ausgestaltet sein. Für eine Erhöhung der Kapazität können ergänzend weitere derartige Kondensatoren, ergänzend oder alternativ jedoch auch andere Energiespeicher, insbesondere Doppelschicht-Kondensatoren oder Batteriezellen, zu der Schalteinheitskapazität parallel geschaltet werden. Die Schalteinheitskapazität ist dabei niederinduktiv ausgestaltet, um eine Kommutierung der Leistungshalbleiterschalter der Schalteinheit zu ermöglichen. Die Sperrspannungsfestigkeit der Leistungshalbleiterschalter wird, insbesondere wenn diese zu einer Halbbrücke verschaltet sind, vorzugsweise höher als ein Maximum der Spannung an der der Halbbrücke zugeordneten Schalteinheitskapazität zuzüglich weiterer Spannungsreserven für mögliche transiente Effekte gewählt.

Die Leistungshalbleiterschalter einer Schalteinheit werden, insbesondere wenn diese eine Halbbrücke umfasst, von der Steuereinrichtung abwechselnd in zumindest zwei Kombinationen von Schaltstellungen gesteuert, sodass an den Anschlüssen der Schalteinheit abwechselnd zumindest zwei Spannungen, beispielsweise eine Spannung null Volt und eine aktuelle Spannung an der Schalteinheitskapazität, anliegen. Das Schalten der Leistungshalbleiterschalter erfolgt dabei vorzugsweise mit einer Schaltfrequenz entsprechend einem Vielfachen der doppelten Netzfrequenz, beispielsweise in einem Bereich zwischen 500 Hz und 5 kHz.

Ein Stromfluss an den Anschlüssen einer Schalteinheit multipliziert mit der an diesen anliegenden Spannung resultiert in einen Leistungsfluss in die Schalteinheit bzw. aus dieser heraus. Dieser Leistungsfluss abzüglich Verlustleistungen, beispielsweise aufgrund parasitärer ohmscher Widerstände, resultiert über die Zeit betrachtet zu einer Energieaufnahme bzw. einer Energieabgabe der Schalteinheitskapazität. Analog zum kapazitiven Energiespeicher der Saugkreisanordnung ergibt sich eine von dem Beladungszustand der Schalteinheitskapazität mit Energie abhängige Spannungsänderung. Eine Auslegung der Saugkreisanordnung erfolgt entsprechend mit dem Ziel, dass in jedem gewünschten Arbeitspunkt unter Berücksichtigung an dem kapazitiven Energiespeicher, an der zumindest einen Schalteinheitskapazität sowie an dem Gleichspannungszwischenkreis anliegender Spannungen mindestens ein Schaltzustand der zumindest einen Schalteinheit existiert, bei dem eine Spannung mit positivem oder negativem Vorzeichen an jeder der zumindest einen Induktivität eingestellt werden kann. Diese Auslegung ermöglicht eine Erhöhung und Absenkung des Stromflusses in jeder Schalteinheit bzw. Schaltanordnung und dadurch in der Saugkreisanordnung durch geeignete Steuerung der Leistungshalbleiterschalter.

Der zumindest eine kapazitive Energiespeicher der Saugkreisanordnung umfasst beispielsweise einen oder mehrere Kondensatoren, wobei diese entsprechend der Schalteinheitskapazität insbesondere als ein Folien- oder Elektrolyt-Kondensator ausgestaltet sein können. Ergänzend oder alternativ kann der kapazitive Energiespeicher wiederum Doppelschicht-Kondensatoren oder Batteriezellen, letztere insbesondere auf Lithium-Ionen-Basis, zur Erhöhung der Kapazität umfassen.

Während des Betriebs der Saugkreisanordnung bzw. des Traktionsumrichters und insbesondere bei einer Ausgestaltung der zumindest einen Schalteinheit als eine Halbbrücke variiert die Spannung an dem kapazitiven Energiespeicher entsprechend der vorstehenden Beschreibung. Vorzugsweise ist der kapazitive Energiespeicher derart ausgestaltet, dass ein Maximum der Spannung, welches bei dessen vollständiger Beladung mit Energie erreicht wird, in dem Bereich einiger zehn Volt bzw. zwischen einem und zehn Prozent unterhalb der Zwischenkreisspannung bzw. der Spannung an der Zwischenkreiskapazität liegt.

Die Kapazität des kapazitiven Energiespeichers ist vorzugsweise derart gewählt, dass eine Differenz zwischen der an diesem anliegenden Spannung und der Zwischenkreisspannung so klein ist, dass zu jedem Zeitpunkt für jede Schalteinheit ein Schaltzustand existiert, in welchem an jeder Induktivität der zugehörigen Schaltanordnung eine positive oder negative Spannung einstellbar ist. Ein kritischer Zeitpunkt ist dabei beispielsweise das Erreichen eines Minimums der Spannung an dem kapazitiven Energiespeicher, insbesondere bei einer minimalen Beladung mit Energie, da die Schalteinheiten dann einen höchsten mindesten Spannungswert erzeugen können müssen.

An der zumindest einen Induktivität einer jeweiligen Schaltanordnung der Saugkreisanordnung liegt eine Spannung an, aus welcher eine Änderung des Stromflusses in der Induktivität und damit in der Saugkreisanordnung resultiert. Die Spannung an der Induktivität hängt dabei von dem Schaltzustand der Schalteinheit, der Spannung an deren Schalteinheitskapazität sowie der Spannung an dem kapazitiven Energiespeicher ab.

Im Vergleich zu der Induktivität bzw. Drossel eines passiven Saugkreises kann die Induktivität der Schaltanordnung vorteilhaft wesentlich, beispielsweise um einen Faktor fünf bis fünfundzwanzig, kleiner gewählt werden. Im Gegensatz zum passiven Saugkreis ergibt sich im Betrieb der Saugkreisanordnung ein Strom durch die Induktivität, welcher mit einer bestimmten Oberschwingung um eine gewünschte Grundschwingung schwankt. Die gewünschte Grundschwingung ist dabei ein Sollwert für den Strom durch die Saugkreisanordnung, typischerweise ein sinusförmiger Strom mit einer doppelten Netzfrequenz, welcher die pulsierende Leistung kompensiert. Ein Effektivwert der Grundschwingung des Stroms durch die Induktivität ist dabei vorteilhaft nicht größer als der Effektivwert des Stroms durch die Induktivität eines passiven Saugkreises.

Eine Steilheit des Stroms definiert dabei die Amplitude der Oberschwingung bei einer bestimmten Schaltfrequenz für die Leistungshalbleiterschalter der Schalteinheiten. Für ein Erreichen einer niedrigen Schaltfrequenz, mit dem Vorteil geringerer Schaltverluste in den Leistungshalbleiterschaltern, und/oder einer niedrigen Induktivität, mit den Vorteilen geringerer Kosten, eines kleineren benötigten Bauraums sowie einer geringeren Masse, und/oder niedriger Oberschwingungen, mit dem Vorteil geringerer Verlust in der Induktivität, sollte die Höhe der Spannung an der Induktivität vorzugsweise in jedem Arbeitspunkt reduziert werden. Dies kann beispielsweise durch ein Schalten mehrerer Schalteinheiten in Serie erfolgen, wodurch eine feinere Abstufung der an der Induktivität anliegenden Spannung erzielt wird. Ferner kann die Saugkreisanordnung beispielsweise derart ausgelegt werden, dass die Spannung an der Schalteinheitskapazität möglichst niedrig ist, die Spannung an dem kapazitiven Energiespeicher, entsprechend vorstehender Beschreibung, hingegen eine nur geringe Differenz zu der Zwischenkreisspannung aufweist.

Die Induktivität einer Schaltanordnung besteht beispielsweise aus einem ferromagnetischen Kern, welcher eine oder mehrere Aussparungen aufweist und dessen Kontur einen oder mehrere diskrete bzw. verteilte Luftspalte aufweist. Die Aussparungen sind dabei mit einer oder mehreren Wicklungen aus elektrisch leitfähigen Drähten, Folien oder Litzen bewickelt, welche in Serie oder parallel verschaltet sind. Sofern die Saugkreisanordnung mehrere Schaltanordnungen und damit mehrere Induktivitäten umfasst, können sich diese beispielsweise einen gemeinsamen Kern mit mehreren Wicklungen teilen.

Beispielsweise bei einem Kurzschluss in dem Gleichspannungszwischenkreis, in einem Stromrichter des Traktionsumrichters oder in einer anderen mit dem Gleichspannungszwischenkreis verbundenen Komponente als Fehlerfall treten hohe Stoßströme auf, welche durch die in dem Gleichspannungszwischenkreis angeordnete Saugkreisanordnung fließen können. Speziell antiparallel geschaltete Dioden der Leistungshalbleiterschalter der Schalteinheiten können, sofern sie hinsichtlich ihrer Stoßstromfestigkeit für einen Normalbetrieb und nicht schaltbar bzw. rechtzeitig abtrennbar ausgelegt sind, zerstört werden mit der Folge, dass der Betrieb der Saugkreisanordnung und damit des Traktionsumrichters beeinträchtigt wird. Vorzugsweise umfasst die Saugkreisanordnung daher zumindest eine Schutzeinheit, mittels welcher Stoßströme insbesondere an den Schalteinheiten bzw. an deren Leistungshalbleiterschaltern und Dioden vorbeigeführt werden.

Eine Schutzeinheit umfasst vorzugsweise eine oder mehrere Dioden sowie einen oder mehrere in Serie dazu geschaltete ohmsche Widerstände. Vorzugsweise ist die Schutzeinheit in der Saugkreisanordnung derart angeordnet, dass sich eine Spannung an der Schutzeinheit während des normalen Betriebs der Saugkreisanordnung nur langsam ändert, beispielsweise mit einer mehrfachen, insbesondere doppelten oder vierfachen, Netzfrequenz. Umfasst die zumindest eine Schalteinheit beispielsweise eine jeweilige Halbbrücke, kann die langsame Änderung beispielsweise dadurch erreicht werden, dass die Anschlüsse Schutzeinheit nicht an den Mittenanschluss der jeweiligen Halbbrücke angeschlossen werden. Dies ermöglicht vorteilhaft den Einsatz kostengünstiger Netzgleichrichter-Dioden mit hoher Stoßstromfestigkeit. Eine solche bevorzugte Anordnung der Schutzeinheit ist gegeben, wenn diese zu der Schaltanordnung bzw. zu den mehreren parallel geschalteten Schaltanordnungen elektrisch parallel geschaltet ist. Dabei ist die zumindest eine Diode der Schutzeinheit im normalen Betrieb der Saugkreisanordnung in Sperrrichtung und im Fehlerfall, entsprechend den zu schützenden Dioden der Leistungshalbleiterschalter der Schaltanordnungen, in Durchlassrichtung orientiert.

Der zumindest eine Widerstand der Schutzeinheit weist einen im Vergleich zu der Schaltanordnung niedrigeren wirksamen Widerstandswert auf. Dieser Widerstandswert ist vorzugsweise derart bemessen, dass der durch die Schaltanordnung fließende Anteil des Stoßstroms unterhalb eines für dessen zu schützenden Dioden zulässigen Werts bleibt, während der andere, größere Anteil des Stoßstroms über die höher belastbare Schutzeinheit abfließt. Neben einer Wandlung eines Teils der Energie des Stoßstroms in Wärme begrenzt der zumindest eine Widerstand der Schutzeinheit auch dessen Amplitude, wodurch wiederum eine kostengünstige Auslegung der zumindest einen Diode der Schutzeinheit vorteilhaft ermöglicht wird.

Die Steuereinrichtung der Saugkreisanordnung kann beispielsweise ausschließlich der Saugkreisanordnung bzw. den Leistungshalbleiterschaltern sowie gegebenenfalls vorgesehenen Schaltern zugeordnet sein. Vorzugsweise ist die Steuereinrichtung jedoch Bestandteil bzw. eine spezielle Funktion einer zentralen Steuereinrichtung des Traktionsumrichters, welche insbesondere auch Leistungshalbleiterschalter der ersten und zweiten Stromrichter sowie gegebenenfalls weiterer Komponenten steuert. Beispielsweise ist die Funktion der Steuereinrichtung als Teil einer Antriebssteuerung des Schienenfahrzeugs ausgestaltet.

Das erfindungsgemäße Verfahren zum Steuern einer erfindungsgemäß ausgestalteten Saugkreisanordnung ist dadurch gekennzeichnet, dass die Leistungshalbleiterschalter der zumindest einen Schalteinheit von der Steuereinrichtung derart gesteuert werden, dass von einem mittels der Saugkreisanordnung generierten Stromfluss eine Kompensation zumindest einer in den Gleichspannungszwischenkreis eingeprägten Harmonischen einer Netzfrequenz bewirkt wird.

Gemäß einer Weiterbildung des erfindungsgemäßen Verfahrens werden die Leistungshalbleiterschalter von der Steuereinrichtung derart gesteuert, dass Zustandsgrößen, insbesondere Spannungen an der zumindest einen Schalteinheitskapazität der zumindest einen Schalteinheit und Ströme durch die zumindest eine Induktivität der zumindest einen Schaltanordnung und Spannungen an dem zumindest einen kapazitiven Energiespeicher der Saugkreisanordnung, hinsichtlich vorgegebener Sollwerte nachgeführt werden.

Gemäß einer auf der vorstehenden Weiterbildung basierenden weiteren Weiterbildung des erfindungsgemäßen Verfahrens wird, sofern eine von der Steuereinrichtung bestimmte Zwischenkreisspannung innerhalb vorgegebener Schwellenwerte liegt und/oder ein Sollstrom durch die zumindest eine Induktivität innerhalb vorgegebener Schwellenwerte liegt, von der Steuereinrichtung die Steuerung der Leistungshalbleiterschalter ausgesetzt.

Die Zwischenkreisspannung kann dabei durch geeignete Messung von der Steuereinrichtung bestimmt werden. Ein Sollstrom bzw. ein einzustellender Strom durch die Saugkreisanordnung liegt vorzugsweise innerhalb vorgegebener Schwellenwerte um einen Nullpunkt. Das Aussetzen der Steuerung der Leistungshalbleiterschalter der zumindest einen Schalteinheit hat vorzugsweise zur Folge, dass diese in einen Sperrzustand versetzt werden.

Gemäß einer weiteren Weiterbildung des erfindungsgemäßen Verfahrens werden bei zumindest zwei parallel geschalteten Schaltanordnungen die Leistungshalbleiterschalter von der Steuereinrichtung derart, insbesondere phasenversetzt, ansteuert, dass sich Oberschwingungen von Strömen in den Schaltanordnungen zumindest teilweise aufheben.

Wesentliches Ziel der Steuerung der Saugkreisanordnung durch die Steuereinrichtung ist das Einstellen eines Stroms durch die Saugkreisanordnung, mittels welchem genau oder annähernd genau ein insbesondere durch die Netzfrequenz hervorgerufener überlagerter Anteil kompensiert wird, sodass im Ergebnis die Zwischenkreisspannung konstant gehalten werden kann. Ergänzend können durch eine geeignete Steuerung neben diesen Anteilen weitere höherfrequente Anteile wie insbesondere weitere Harmonische der Netzfrequenz und/oder Schaltfrequenzen der Stromrichter kompensiert werden.

Mittels der Steuerung werden insbesondere Zustandsgrößen innerhalb der Saugkreisanordnung beeinflusst. Diese Beeinflussung kann beispielsweise die Spannungen an dem kapazitiven Energiespeicher und den Schalteinheitskapazitäten und/oder die Ströme durch die Induktivität bzw. mehreren Induktivitäten betreffen. Dabei können diese Spannungen und/oder Ströme beispielsweise und insbesondere unabhängig voneinander einem jeweils vorgegebenen Sollwert nachgeführt werden. Abweichungen von vorgegebenen Sollwerten treten beispielsweise aufgrund einer Entladung von Kapazitäten durch Leckströme oder aufgrund von Energieverlusten in Leistungshalbleiterelementen und Induktivitäten auf.

Geeignete Sollwerte für die Zustandsgrößen liegen beispielsweise dann vor, wenn mit diesen eine konstante bzw. nahezu konstante Zwischenkreisspannung erzielt wird, bei einer zulässigen Abweichung von beispielsweise wenigen Prozentpunkten. Ergänzend werden die Sollwerte beispielsweise derart gewählt, dass ein maximaler Wert der Spannung an dem zumindest einen kapazitiven Energiespeicher nur wenige zehn Volt bzw. ein bis zehn Prozentpunkte unterhalb der Zwischenkreisspannung liegt. Darauf basierend werden die Sollwerte ferner beispielsweise derart gewählt, dass eine Spannung an der zumindest einen Schalteinheitskapazität, bei den genannten Sollwerten für den kapazitiven Energiespeicher, noch ausreichend hoch genug bzw. mit einer beispielhaften Reserve von einigen zehn Volt bzw. ein bis zehn Prozentpunkte der Zwischenkreisspannung gewählt wird, dass immer mindestens ein Schaltzustand der Schalteinheiten existiert, bei welchem eine Spannung positiven oder negativen Vorzeichens an der zumindest einen Induktivität der zugehörigen Schaltanordnung eingestellt werden kann.

Durch diese ergänzend gewählten Sollwerte für die Spannungen an dem kapazitiven Energiespeicher und der Schalteinheitskapazität kann sichergestellt werden, einerseits den Stromfluss durch die Saugkreisanordnung mittels der Steuereinrichtung beeinflussen zu können, andererseits eine an der zumindest einen Induktivität angelegte Spannung möglichst niedrig halten zu können. Vorteilhaft führt dabei eine niedrige Spannung an der Induktivität zu einer geringen Änderung des Stroms pro Zeiteinheit, wodurch geringere Oberschwingungen in dem Strom durch die Induktivität sowie entsprechend in dem Gleichspannungszwischenkreis erzielt werden können.

Mittels insbesondere einer sich über die Zeit verändernden Wahl von Schaltzuständen der Leistungshalbleiterschalter von Schalteinheiten der zumindest einen Schaltanordnung durch die Steuereinrichtung kann eine resultierende Spannung an der zumindest einen Induktivität der Schaltanordnung eingestellt werden, wodurch wiederum eine Änderung des Stroms durch die Induktivität bzw. durch die Saugkreisanordnung hervorgerufen werden kann.

Umfasst die Saugkreisanordnung beispielsweise mehrere parallel geschaltete Schaltanordnungen mit jeweils zumindest einer Schalteinheit und zumindest einer Induktivität, kann durch die Wahl der Schaltzustände der Strom in der jeweiligen Schaltanordnung derart beeinflusst werden, dass sich Oberschwingungen der Ströme in dem sich aus den mehreren Strömen ergebenden Gesamtstrom zumindest teilweise aufheben. Hierfür kann die Steuerung der Leistungshalbleiterschalter der Schalteinheiten der jeweiligen Schaltanordnung beispielsweise derart zeitlich versetzt bzw. phasenversetzt erfolgen, dass bei einem mit einer bestimmten Steilheit ansteigenden Strom in der Induktivität der einen Schaltanordnung der Gesamtstrom der weiteren Schaltanordnungen mit einer gleichen oder zumindest ähnlichen Steilheit abfällt, bzw. dass bei einem mit einer bestimmten Steilheit abfallenden Strom in der Induktivität der einen Schaltanordnung der Gesamtstrom der weiteren Schaltanordnungen mit einer gleichen oder zumindest ähnlichen Steilheit ansteigt.

Sofern mehrere mögliche Schaltzustände existieren, welche jeweils eine Spannung gleichen Vorzeichens an der zumindest einen Induktivität einer Schaltanordnung anlegen und eine Stromänderung gleichen Vorzeichens in der Induktivität hervorrufen, kann der geeignete Schaltzustand anhand insbesondere folgender Kriterien gewählt werden. Als ein erstes Kriterium kann bei mehreren Schaltzuständen, welche jeweils eine Spannung an den Schalteinheitskapazitäten der Schalteinheiten derart beeinflussen, dass diese aufgeladen werden, der Schaltzustand gewählt werden, welcher zum Aufladen der einen oder mehreren Schalteinheitskapazitäten führt, deren Spannung am weitesten unterhalb eines vorgegebenen Sollwerts liegen. Entsprechend wird bei mehreren Schaltzuständen, welche jeweils die Spannung an den Schalteinheitskapazitäten derart beeinflussen, dass diese entladen werden, der Schaltzustand gewählt, der zum Entladen der einen oder mehreren Schalteinheitskapazitäten führt, deren Spannung am weitesten oberhalb des vorgegebenen Sollwerts liegen. Als ein zweites Kriterium kann der Schaltzustand gewählt werden, welcher zu einem Anlegen einer betragsmäßig niedrigen Spannung an der zumindest einen Induktivität führt, um eine geringe Steilheit des Stroms und dadurch geringe Oberschwingungen zu erzielen, wenn mit dieser niedrigen Spannung der gewünschte Sollstrom innerhalb eines bestimmten Zeitraums, beispielsweise innerhalb von ein bis drei Schaltperioden, erreicht werden kann, und andernfalls ein Schaltzustand gewählt wird, welcher zu einem Anlegen einer betragsmäßig höheren Spannung führt. Ferner kann als ein drittes Kriterium, insbesondere wenn das erste und das zweite Kriterium nicht gleichzeitig erfüllt werden können, das erste Kriterium bevorzugt werden, wenn die Spannung an den Schalteinheitskapazitäten um mehr vorgegebene Prozentpunkte, beispielsweise um zwanzig Prozentpunkte, von dem vorgegebenen Sollwert abweicht.

Entspricht der von der Saugkreisanordnung eingestellte Strom genau dem zu kompensierenden Strom, abzüglich möglicher Oberschwingungen beispielsweise aufgrund des Schaltens von Leistungshalbleiterschaltern der Stromrichter, so kann dieser als idealer Kompensationsstrom betrachtet werden. Eine begrenzte Abweichung von diesem idealen Kompensationsstrom und in dessen Folge eine begrenzte Abweichung von einer idealen konstanten Zwischenkreisspannung, beispielsweise um einige zehn Volt bzw. wenige Prozentpunkte, kann jedoch für die Steuerung der Saugkreisanordnung Vorteile erschließen, ohne negative Auswirkungen auf den Traktionsumrichter bzw. auf das Traktionssystem zu haben.

Insbesondere in Zeiträumen, in denen ein nur niedriger Kompensationsstrom erforderlich ist, kann beispielsweise die Steuerung der Schaltzustände der Leistungshalbleiterschalter von der Steuereinrichtung ausgesetzt werden. Dieses Aussetzen bewirkt ein jeweiliges Sperren der Leistungshalbleiterschalter, wodurch kein Strom mehr durch die jeweilige Schaltanordnung fließt. Vorzugsweise wird die Steuerung solange ausgesetzt, wie die Zwischenkreisspannung innerhalb eines von einem oberen und einem unteren Schwellenwert begrenzten vorgegebenen Toleranzbands liegt. Beispielsweise erfolgt das Aussetzen, wenn eine Änderung des Vorzeichens des Kompensationsstroms aufgrund von durch die Saugkreisanordnung selbst hervorgerufenen Oberschwingungen auftritt, während der Sollwert der Grundschwingung des Stroms durch die Saugkreisanordnung in einem gleichen betrachteten Zeitraum ein konstantes Vorzeichen aufweist. Erst bei einem erwarteten Über- bzw. Unterschreiten des vorgegebenen Toleranzbands wird die Steuerung der Leistungshalbleiterschalter wieder solange aktiviert und ein Kompensationsstrom durch die Saugkreisanordnung eingestellt, bis die Zwischenkreisspannung einen Wert erreicht, ausgehend von dem sie über einen möglichst langen Zeitraum innerhalb des Toleranzbands verbleiben wird. Nach Erreichen dieses Werts wird die Steuerung der Leistungshalbleiterschalter von der Steuereinrichtung wiederum ausgesetzt. Hierdurch wird der Stromfluss durch die Saugkreisanordnung zeitlich beschränkt, wodurch vorteilhaft Verluste verringert und der Wirkungsgrad der Saugkreisanordnung erhöht werden können.

Alternativ oder ergänzend zu Zeiträumen, in denen die Steuerung der Leistungshalbleiterschalter ausgesetzt wird, kann von einem idealen Kompensationsstrom abgewichen werden, um Spannungen an Speichereinheitskapazitäten sowie an dem zumindest einen kapazitiven Energiespeicher nachzuführen. Bei zumindest zwei parallel geschalteten Schaltanordnungen mit jeweils zumindest einer Schalteinheit und einer mit dieser in Serie geschalteten Induktivität können beispielsweise zusätzlich zu dem Kompensationsstrom weitere Stromanteile eingeprägt werden. Diese weiteren Stromanteile weisen vorzugsweise eine im Vergleich zu der Grundschwingung deutliche niedrigere Frequenz bzw. einen sich nur langsam verändernden Gleichanteil auf. Fließt ein solcher Gleichanteil durch eine erste der Schaltanordnungen, so führt dies abhängig von dem Vorzeichen des Stromanteils zu einem Aufladen bzw. Entladen zumindest einer Speichereinheitskapazität einer Schalteinheit der ersten Schaltanordnung. Schließt sich der Stromkreis für diesen Gleichanteil, indem dieser Strom durch eine zweite der Schaltanordnungen wieder zurückfließt, so führt dies entsprechend zu einem Entladen bzw. Aufladen von zumindest einer Schalteinheitskapazität einer Schalteinheit der zweiten Schaltanordnung. Hierdurch können die Spannungen an den Schalteinheitskapazitäten parallel geschalteter Schaltanordnungen unabhängig voneinander beeinflusst werden.

Schließt sich der Stromkreis für diesen Gleichanteil hingegen, indem der Stromanteil durch die erste Schaltanordnung und über den zumindest einen kapazitiven Energiespeicher der Saugkreisanordnung fließt, so führt dies abhängig von dessen Vorzeichen zu einem gleichzeitigen Aufladen bzw. Entladen sowohl des kapazitiven Energiespeichers als auch von zumindest einer Schalteinheitskapazität einer Schalteinheit der ersten Schaltanordnung. Dieses Schließen des Stromkreises erfolgt ebenfalls für den Fall, dass die Saugkreisanordnung anstelle der vorstehend beispielhaften zwei parallel geschalteten Schaltanordnung lediglich eine einzige Schaltanordnung umfasst.

Ferner kann alternativ oder ergänzend der Stromfluss durch die Saugkreisanordnung derart gesteuert werden, dass die Zwischenkreisspannung, bei einem angenommenen oder vorgegebenen Sollwert für die Zwischenkreisspannung, während einer Phase der Energieaufnahme der Saugkreisanordnung unter diesem Sollwert, während einer Phase der Energieabgabe der Saugkreisanordnung hingegen über dem Sollwert liegen kann.

Die Phasen der Energieaufnahme und Energieabgabe treten dabei entsprechend der Grundschwingung auf. Im Vergleich zu einem idealen Kompensationsstrom, bei welchem die Zwischenkreisspannung konstant dem Sollwert für die Zwischenkreisspannung entspricht, führt dies im Mittel zu einer Verringerung der gespeicherten Energie in zumindest einer der Schalteinheitskapazitäten und damit zu einer Absenkung der im Mittel an dieser Schalteinheitskapazität anliegenden Spannung. Umgekehrt kann eine Steuerung des Stromflusses durch die Saugkreisanordnung derart, dass die Zwischenkreisspannung während einer Phase der Energieabgabe unterhalb des Sollwerts für die Zwischenkreisspannung und während einer Phase der Energieaufnahme oberhalb des Sollwerts liegt, im Mittel zu einer Steigerung der gespeicherten Energie in zumindest einer der Schalteinheitskapazitäten und damit zu einer Steigerung der im Mittel an dieser Schalteinheitskapazität anliegenden Spannung führen. Dieses Verhalten kann vorteilhaft dazu genutzt werden, die jeweilige Spannung an der zumindest einen Schalteinheitskapazität zu verändern. Beispielsweise kann dies über ein Einprägen eines zusätzlichen Wechselstromanteils, welcher gegenüber dem mit dem Gleichspannungszwischenkreis austauschten Stromanteil um plus bzw. minus neunzig Grad phasenverschoben ist, erfolgen. Dieser zusätzlich eingeprägte Wechselstromanteil ruft eine Welligkeit der Zwischenkreisspannung hervor, welche phasengleich mit der Phase der Energieaufnahme bzw. der Energieabgabe ist, wodurch es zu einer Verringerung bzw. Steigerung der in der zumindest einen Schalteinheitskapazität gespeicherten Energie und damit zu einer Absenkung der an der Schalteinheitskapazität anliegenden Spannung kommt.

Mittels einer Kombination der vorstehend beschriebenen Steuerungen der Saugkreisanordnung durch die Steuereinrichtung können die Spannungen an der zumindest einen Schalteinheitskapazität sowie an dem zumindest einen kapazitiven Energiespeicher unabhängig voneinander beeinflusst und damit einem jeweiligen gewünschten bzw. vorgegebenen Sollwert nachgeführt werden.

Eine Änderung der mittleren Spannung an dem zumindest einen kapazitiven Energiespeicher der Saugkreisanordnung ohne Beeinflussung der Spannung an der zumindest einen Schalteinheitskapazität kann dabei beispielsweise durch ein Einprägen eines zusätzlichen Gleichanteils auf den Strom durch den kapazitiven Energiespeicher erfolgen, wobei der zusätzliche Gleichanteil bei mehreren parallel geschalteten Schaltanordnungen gemeinsam und vorzugsweise gleichverteilt aufgebracht wird. Der zusätzliche Gleichanteil führt zu einer Erhöhung bzw. Absenkung der mittleren Spannung an dem kapazitiven Energiespeicher. Um dabei eine entsprechende Erhöhung bzw. Absenkung der mittleren Spannung an den Schalteinheitskapazitäten zu vermeiden, erfolgt gleichzeitig ein Einprägen einer Welligkeit auf der Zwischenkreisspannung, sodass die Energieaufnahme bzw. Energieabgabe der Schalteinheitskapazitäten durch den Gleichanteil kompensiert wird.

Um die mittlere Spannung an den Schalteinheitskapazitäten konstant halten zu können, muss gegebenenfalls ein Ausgleich zwischen unterschiedlichen Spannungen an den Schalteinheitskapazitäten erfolgen, welche beispielsweise durch Fertigungstoleranzen der Schalteinheitskapazitäten bedingt sind. Dabei kann für eine Änderung der mittleren Spannung an allen Schalteinheitskapazitäten und ohne Änderung der mittleren Spannung an dem zumindest einen kapazitiven Energiespeicher eine Welligkeit auf die Zwischenkreisspannung eingeprägt werden, welche zu einer gewünschten Energieaufnahme bzw. Energieabgabe der Schalteinheitskapazitäten führt. Ergänzend kann bei zumindest zwei parallel geschalteten Schaltanordnungen mit jeweils zumindest einer Schalteinheitskapazität für einen Ausgleich der Spannungen an den Schalteinheitskapazitäten zwischen diesen parallelen Schaltanordnungen ein Gleichanteil eines Stroms eingeprägt werden, welcher über eine erste und eine zweite Schaltanordnung fließt und somit die mittlere Spannung in der ersten Schaltanordnung in umgekehrter Richtung zu der mittleren Spannung in der zweiten Schaltanordnung beeinflusst. Ferner kann bei einer Schaltanordnung mit mehreren in Serie geschalteten Schalteinheiten für einen Ausgleich unterschiedlicher Spannungen an den Schalteinheitskapazitäten dieser Schalteinheiten ergänzend abhängig von einer Richtung des Stromflusses ein Schaltzustand der Schalteinheiten gewählt werden, welcher eine zu niedrige Spannung an jeweils einer der Schalteinheitskapazitäten erhöht oder diese zumindest nicht weiter absenkt, bzw. eine zu hohe Spannung reduziert oder diese zumindest nicht weiter erhöht. Bei einer entsprechenden Ausgestaltung der Saugkreisanordnung können die beschriebenen Verfahren vorzugsweise gleichzeitig bzw. parallel durchgeführt werden.

Die Steuerung der Saugkreisanordnung erfolgt seitens der Steuereinrichtung vorzugsweise unter Berücksichtigung von mittels geeigneter Sensoren bestimmten Werten bezüglich insbesondere in der Saugkreisanordnung fließender Ströme sowie an Kapazitäten anliegender Spannungen. Diese Werte werden beispielsweise mit einem zehn- bis tausendfachen der Netzfrequenz bestimmt. Anhand der Werte bestimmt die Steuereinrichtung einen Ist-Zustand der Saugkreisanordnung, ausgehend von welchem sie erforderliche Maßnahmen für eine Annäherung an einen gewünschten Ziel-Zustand der Saugkreisanordnung durch eine geeignete Steuerung der Leistungshalbleiterschalter ableitet.

Die Spannungen an dem zumindest einen kapazitiven Energiespeicher sowie an der zumindest einen Schalteinheitskapazität können nach den vorstehend beschriebenen Verfahren von der Steuereinrichtung bestimmten oder vorgegebenen Sollwerten nur mit einer begrenzten Dynamik nachgeführt werden. Kommt es während des normalen Betriebs der Saugkreisanordnung, beispielsweise aufgrund einer abrupten Laständerung in dem Traktionssystem, zu einer ebenfalls abrupten Änderung der Sollwerte, so kann eine Annäherung an diese Sollwerte mittels der vorstehend beschriebenen Steuerungsverfahren für die Leistungshalbleiterschalter aufgrund der begrenzten Dynamik gegebenenfalls nicht mehr möglich sein, sodass die Saugkreisanordnung einen Betriebszustand einnimmt, in dem zumindest über einen Teil der Periode der Grundschwingung keine Schaltzustände der Leistungshalbleiter existieren, um an jeder Induktivität der Saugkreisanordnung eine Spannung beider Vorzeichen einstellen zu können. Dies hat zur Folge, dass der Strom durch die entsprechende Induktivität nicht mehr beliebig gesteuert werden kann. Eine derartige Situation kann als Verletzung des aktiv steuerbaren Betriebsbereichs bezeichnet werden.

Um zu erkennen, ob ausgehend von dem bestimmten Ist-Zustand der Saugkreisanordnung, dem erforderlichen Kompensationsstrom und unter Berücksichtigung der Eigenschaften der Saugkreisanordnung während der nachfolgenden Periode mit einer solchen Verletzung des aktiv steuerbaren Betriebsbereichs gerechnet werden muss und um dann entsprechende Maßnahmen ableiten zu können, sollte die Steuereinrichtung ausgehend von diesen Parametern vorzugsweise regelmäßig eine Prognose über ein zukünftiges Verhalten, beispielsweise über einen Zeitraum entsprechend einer halben Periode der Netzfrequenz, treffen. Ein derart prognostizierter Zeitverlauf des Verhaltens von Zustandsgrößen, beispielsweise Spannungen an kapazitiven Energiespeichern und Schalteinheitskapazitäten, wird anschließend hinsichtlich möglicher Verletzungen des aktiv steuerbaren Betriebsbereichs überprüft. Beispielsweise ist eine Verletzung durch ein Fehlen eines vorgesehenen Schaltzustands einer Schaltanordnung bedingt, welcher dazu dienen sollte, den Strom in der zugeordneten Induktivität zu erhöhen oder zu verringern. Vorzugsweise kann die Prognose dabei auf besonders kritische Zeitpunkte innerhalb der betrachteten Periode, beispielsweise Zeitpunkte maximaler und/oder minimaler gespeicherter Energie in der Saugkreisanordnung, beschränkt werden. Sofern bezüglich der damit zusammenhängenden maximalen bzw. minimalen Spannungen an dem mindestens einen Schalteinheitskondensator und dem kapazitiven Energiespeicher keine Verletzung des aktiv steuerbaren Betriebsbereichs ermittelt werden kann, so ist dies ebenfalls für weitere Zeitpunkte nicht zu erwarten.

Um einer Verletzung des aktiv steuerbaren Betriebsbereichs zu begegnen, wenn eine solche eingetreten ist oder von der Steuereinrichtung prognostiziert wird, können nach einem ersten Verfahren beispielsweise die Leistungshalbleiterschalter der zumindest einen Schalteinheit während einer Phase, in welcher die Saugkreisanordnung Energie aufnehmen oder abgeben sollte, zu Beginn dieser Phase über einen bestimmten Zeitraum in einem Schaltzustand gehalten werden, welcher einem Sperren entspricht, und erst anschließend in Schaltzustände versetzt werden, in denen sie den Kompensationsstrom bis zum Abschluss der Phase einstellen. Vorzugsweise wird der Zeitraum des Sperrens dabei derart bemessen, dass während des anschließenden Zeitraums bis zum Abschluss der Phase der Energieaufnahme oder Energieabgabe keine Verletzung des aktiv steuerbaren Betriebsbereichs prognostiziert bzw. auftreten wird. Im Zusammenspiel mit den Stromrichtern des Traktionsumrichters führt die Steuerung nach diesem ersten Verfahren zu einer variablen Zwischenkreisspannung, welche über die Zeit den Ist-Zustand der Saugkreisanordnung derart verändert, dass diese wieder in einen normalen Betrieb ohne Verletzung des aktiv steuerbaren Betriebsbereichs übergehen kann.

Ferner können, um einer Verletzung des aktiv steuerbaren Betriebsbereichs zu begegnen, wenn diese eingetreten ist oder von der Steuereinrichtung prognostiziert wird, nach einem zweiten Verfahren alternativ die Leistungshalbleiterschalter der zumindest einen Schalteinheit während einer Phase, in welcher die Saugkreisanordnung Energie aufnehmen oder abgeben sollte, zu Beginn dieser Phase solange in Schaltzustände versetzt werden, in denen sie den Kompensationsstrom einstellen, bis der Kompensationsstrom aufgrund einer Verletzung des aktiv steuerbaren Betriebsbereichs nicht mehr einstellbar ist. Nach diesem Zeitraum werden die Leistungshalbleiterschalter bis zum Abschluss der Phase in einen Schaltzustand versetzt, welcher einem Sperren oder einem kontinuierlichen Leiten entspricht. Im Zusammenspiel mit den Stromrichtern des Traktionsumrichters führt die Steuerung nach diesem zweiten Verfahren wiederum zu einer variablen Zwischenkreisspannung, welche über die Zeit den Ist-Zustand derart verändert, dass die Saugkreisanordnung wieder in einen normalen Betrieb ohne Verletzung des aktiv steuerbaren Betriebsbereichs übergehen kann.

Für die Wahl eines der beiden vorstehend beschriebenen Verfahren für einen Übergang in einen normalen Betrieb der Saugkreisanordnung aus einem Zustand tatsächlicher oder prognostizierter Verletzung des aktiv steuerbaren Betriebsbereichs kann ausgehend von dem Ist-Zustand der Saugkreisanordnung von der Steuereinrichtung ein Szenario berechnet werden, in welchem die kapazitiven Energiespeicher und Schalteinheitskapazitäten der Saugkreisanordnung solange mit einem reinen Gleichstrom aufgeladen bzw. entladen werden, wobei der Gleichstrom gleichmäßig auf parallelgeschaltete Schaltanordnungen aufgeteilt wird, bis eine erste Verletzung des aktiv steuerbaren Betriebsbereichs auftritt. Besteht diese Verletzung beispielsweise in einer zu hohen Spannung an dem zumindest einen kapazitiven Energiespeicher, insbesondere einer höheren Spannung als der Zwischenkreisspannung, wird vorzugsweise das erste Verfahren durchgeführt, während bei anderen Verletzungen vorzugsweise das zweite Verfahren durchgeführt wird.

Erfindungsgemäß verwendet wird eine erfindungsgemäße Saugkreisanordnung in einem Traktionsumrichter eines Schienenfahrzeugs, oder für ein erfindungsgemäßes Verfahren.

Nachfolgend wird die Erfindung anhand von Ausführungsbeispielen erläutert. Dabei zeigen:
- FIG 1: ein Schienenfahrzeug mit einem Traktionssystem für einen Betrieb an einem Wechselspannungs-Versorgungsnetz,
- FIG 2: ein Traktionssystem mit einer erfindungsgemäßen Saugkreisanordnung,
- FIG 3A-3C: alternative Ausgestaltungen der erfindungsgemäßen Saugkreisanordnung,
- FIG 4A-4E: alternative Ausgestaltungen von Schaltanordnungen der erfindungsgemäßen Saugkreisanordnung,
- FIG 5A-5C: alternative Ausgestaltungen von Schalteinrichtungen der erfindungsgemäßen Saugkreisanordnung,
- FIG 6: eine erfindungsgemäße Saugkreisanordnung mit einer Mehrzahl Schaltanordnungen mit jeweils zwei Schalteinheiten, Schaltern sowie einer Schutzeinheit, zur Erläuterung der Funktion der Saugkreisanordnung, und
- FIG 7: eine weitere erfindungsgemäße Saugkreisanordnung mit einer Mehrzahl Schaltanordnungen mit jeweils einer Schalteinheit.

Aus Gründen der Übersichtlichkeit werden für gleiche bzw. gleich oder nahezu gleich wirkende Komponenten dieselben Bezugszeichen verwendet.

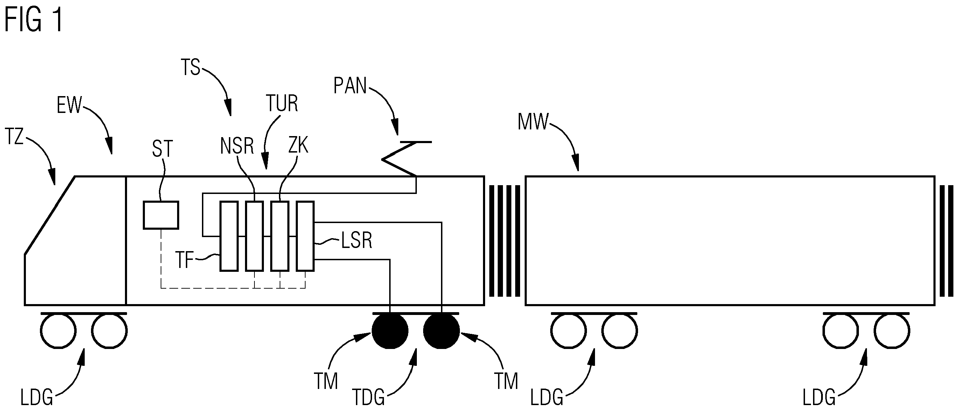

FIG 1 zeigt schematisch ein Schienenfahrzeug TZ in einer Seitenansicht. Das Schienenfahrzeug TZ ist beispielhaft als ein Triebzug mit einer Mehrzahl Wagen ausgestaltet, wobei lediglich ein Endwagen EW sowie ein mit diesem gekoppelter Mittelwagen MW dargestellt sind. Beide Wagen verfügen über einen jeweiligen Wagenkasten, welcher sich über Drehgestelle in Form von Triebdrehgestellen TDG mit darin angeordneten Traktionsmotoren TM sowie Laufdrehgestellen LDG auf nicht dargestellten Schienen eines Gleises abstützt. Alternativ zu einem Triebzug mit mehreren Wagen kann das Schienenfahrzeug auch als eine Lokomotive mit lediglich einem Wagenkasten ausgestaltet sein.

Ein Traktionssystem TS des Schienenfahrzeugs TZ umfasst neben Traktionsmotoren TM in einem oder mehreren Triebdrehgestellen TDG einen Traktionsumrichter TUR, eine zumindest den Traktionsumrichter TUR steuernde Steuereinrichtung ST, einen Transformator TF sowie einen Stromabnehmer PAN. Diese Komponenten des Traktionssystems TS sind schematisch in bzw. an dem Endwagen EW angeordnet dargestellt. In der Praxis, insbesondere bei Nutzung auch der Endwagen für eine Fahrgastbeförderung, sind diese hingegen üblicherweise in speziellen Bereichen innerhalb des Wagenkastens, im Unterflurbereich, im Dachbereich oder auch verteilt über mehrere Wagen des Schienenfahrzeugs TZ angeordnet. Hierdurch kann in den Wagenkästen ein jeweiliger Fahrgastraum bereitgestellt werden, wobei die Fahrgasträume benachbarter Wagen wie dargestellt über Wagenübergänge miteinander verbunden sein können. Weitere Komponenten des Traktionssystems TS, beispielsweise eine oder mehrere Traktionsbatterien, sowie dem Betrieb der Komponenten und dem Komfort der Fahrgäste dienende Hilfsbetriebe können ergänzend vorgesehen und entsprechend angeordnet sein. Solche Komponenten sind in der FIG 1 jedoch nicht speziell dargestellt.

Über den im Dachbereich des Wagenkastens des Endwagens EW beispielhaft angeordneten Stromabnehmer PAN ist das Traktionssystem TS mit einer nicht dargestellten Oberleitung eines Versorgungsnetzes elektrisch verbindbar. An der Oberleitung liegt beispielsweise eine in Europa übliche Einphasen-Wechselspannung von 15 kV bei 16,7 Hz oder 25 kV bei 50 Hz an. Diese Wechselspannung wird einer Primärwicklung des Transformators TF zugeführt, welcher das netzseitige Spannungsniveau entsprechend einer gewählten Übersetzung des Transformators TF auf ein niedrigeres Spannungsniveau heruntertransformiert. Eine oder mehrere Sekundärwicklungen des Transformators TF sind mit einem oder mehreren netzseitigen ersten Stromrichtern NSR, welche beispielsweise jeweils als ein Vierquadrantensteller ausgestaltet sind, des Traktionsumrichters TUR verbunden. Die ersten Stromrichter NSR wandeln die Einphasen-Wechselspannung des Transformators TF jeweils in eine Gleichspannung, welche einem gemeinsamen Gleichspannungszwischenkreis ZK zugeführt wird. Mit dem Gleichspannungszwischenkreis ZK sind ferner ein oder mehrere lastseitige zweite Stromrichter LSR des Traktionsumrichters TUR verbunden, welche beispielsweise jeweils als ein Pulswechselrichter ausgestaltet sind. Die zweiten Stromrichter LSR wandeln die Gleichspannung des Gleichspannungszwischenkreises ZK beispielsweise in eine Dreiphasenwechselspannung variabler Frequenz und Amplitude, mit welcher Statorwicklungen jeweils eines oder mehrerer Traktionsmotoren TM gespeist werden. Gesteuert wird die jeweilige Funktion der Stromrichter NSR, LSR von der zentralen Steuereinrichtung ST des Traktionssystems TS bzw. des Traktionsumrichters TUR.

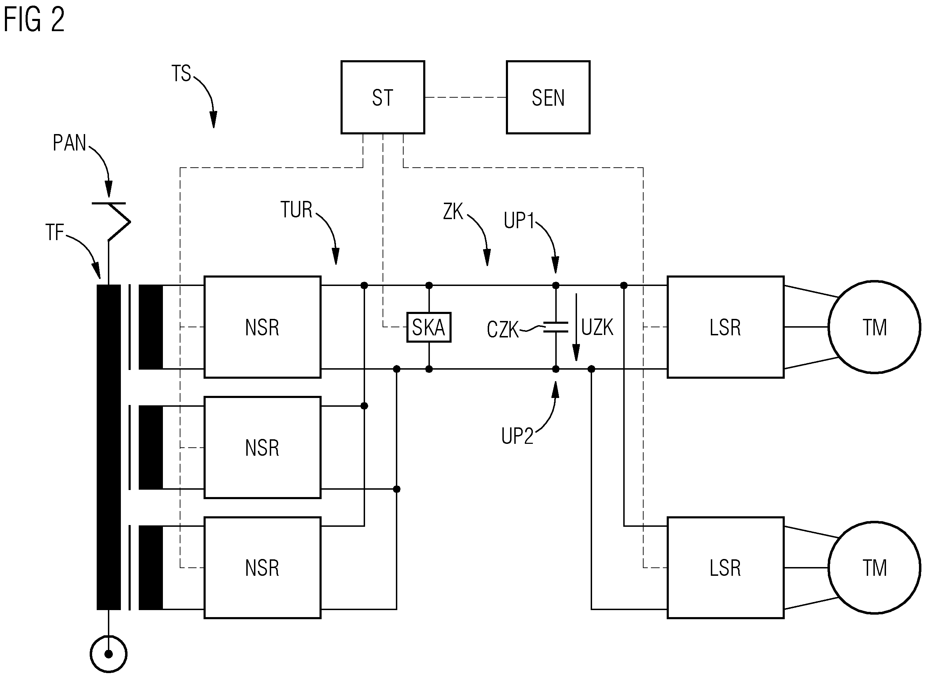

FIG 2 zeigt das Traktionssystem TS der FIG 1 in einer detaillierteren schematischen Darstellung. Die Primärwicklung des Transformators TF ist demnach einerseits mit dem Stromabnehmer PAN und andererseits beispielhaft über einen Radsatz mit Schienen verbunden. Die drei beispielhaft angegebenen Sekundärwicklungen des Transformators TF sind jeweils mit einem netzseitigen ersten Stromrichter NSR des Traktionsumrichters TUR verbunden, welche die von der Sekundärwicklung bereitgestellte Wechselspannung jeweils in eine Gleichspannung wandeln, mit welcher sie einen gemeinsamen Gleichspannungszwischenkreis ZK speisen. Aus dem Gleichspannungszwischenkreis ZK werden zwei beispielhaft angegebene lastseitige zweite Stromrichter LSR gespeist, welche die von dem Gleichspannungszwischenkreis ZK bereitgestellte Gleichspannung jeweils in eine DreiphasenWechselspannung variabler Höhe und Frequenz wandeln, mit welcher beispielhaft jeweils ein Traktionsmotor TM in dem Triebdrehgestell TDG des Endwagens EW des Schienenfahrzeugs TZ gespeist wird. Insbesondere bei Ausgestaltung der Traktionsmotoren TM als Drehstrom-Synchronmaschinen speist jeder zweite Stromrichter LSR nur jeweils einen Traktionsmotor TM, während bei Ausgestaltung der Traktionsmotoren TM als Drehstrom-Asynchronmaschinen jeder zweite Stromrichter LSR auch parallel mehrere Traktionsmotoren TM, beispielsweise eine jeweiligen Triebdrehgestells, speisen kann. Die jeweilige Funktion der ersten und zweiten Stromrichter NSR, LSR bzw. insbesondere die Schaltstellungen von deren jeweiligen Leistungshalbleiterschalter wird von der zentralen Steuereinrichtung ST des Traktionsumrichters TUR bzw. des Traktionssystems TS mittels von der Steuereinrichtung ST generierten Steuersignalen gesteuert. Die Steuereinrichtung ST basiert die Steuerung dabei beispielsweise auf Informationen verschiedener Sensoren SEN, insbesondere Spannungs- und Stromsensoren. Signaltechnische Verbindungen zwischen der Steuereinrichtung ST und den Stromrichtern NSR, LSR sowie den Sensoren SEN sind in den FIG 1 und 2 jeweils mittels gestrichelter Linien dargestellt.

In dem Gleichspannungszwischenkreis ZK des Traktionsumrichters TUR ist eine Zwischenkreiskapazität CZK angeordnet. Diese beispielhaft als eine einzige Kapazität dargestellte Zwischenkreiskapazität CZK kann einen oder mehrere parallel geschaltete Kondensatoren umfassen, wobei diese beispielsweise auch als jeweiliger Bestandteil der zweiten Stromrichter LSR verteilt angeordnet sein können. An der Zwischenkreiskapazität CZK bzw. zwischen einem ersten Spannungspotenzial UP1 und einem zweiten Spannungspotenzial UP2 des Gleichspannungszwischenkreises ZK liegt während des normalen Betriebs des Traktionsumrichters TUR eine Zwischenkreisspannung UZK an.

In dem Gleichspannungszwischenkreis ZK und parallel zu der Zwischenkreiskapazität CZK ist ferner eine erfindungsgemäße Saugkreisanordnung SKA angeordnet, welche ebenfalls mit der Steuereinrichtung ST signaltechnisch verbunden ist, wie wiederum mittels einer gestrichelten Linie dargestellt.

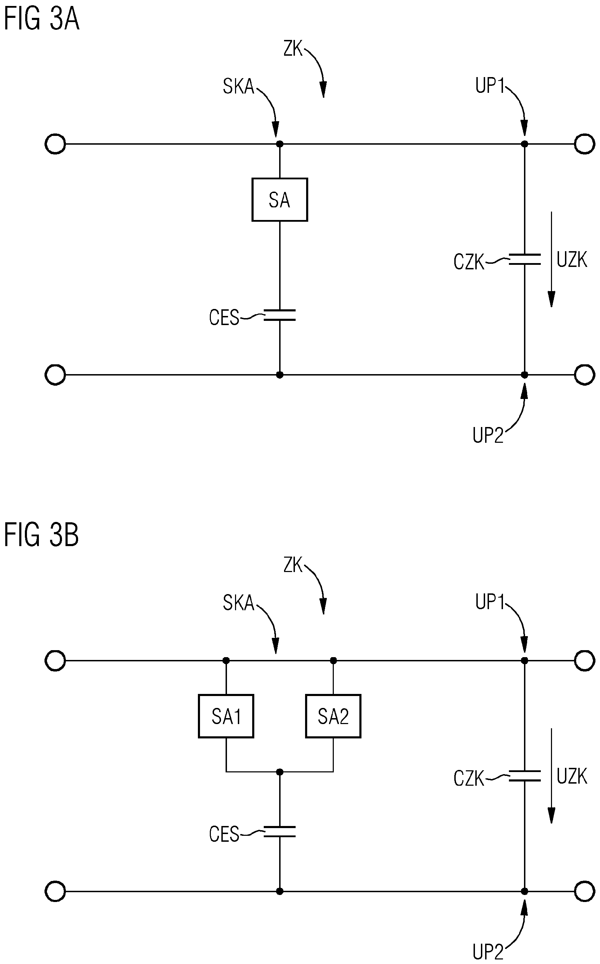

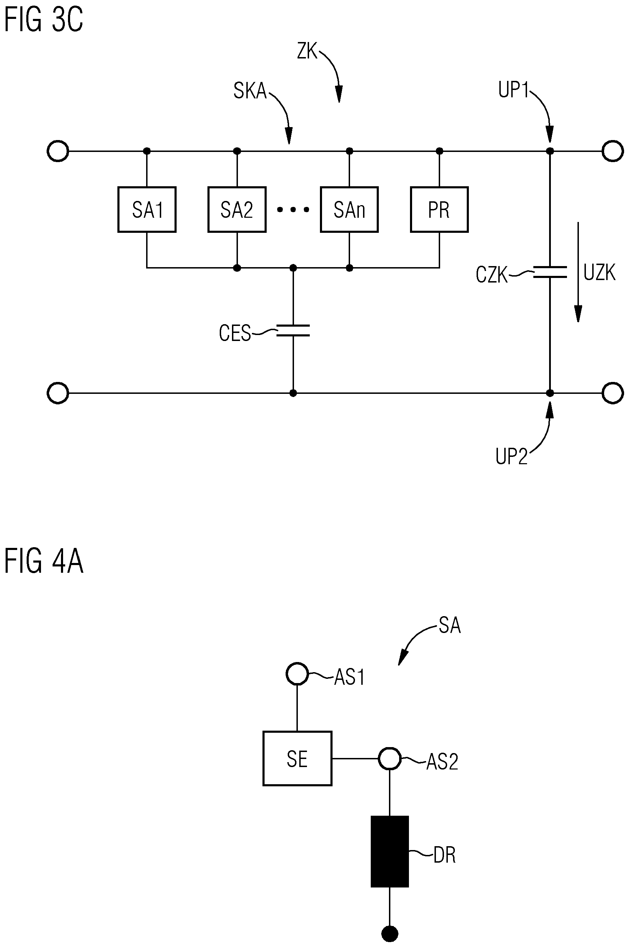

FIG 3 zeigt beispielhafte alternative Ausgestaltungen der erfindungsgemäßen Saugkreisanordnung SKA, welche entsprechend der FIG 2 in dem Gleichspannungszwischenkreis ZK und parallel zu einer Zwischenkreiskapazität CZK angeordnet ist. Die Saugkreisanordnung SKA der FIG 3A umfasst dabei eine Schaltanordnung SA sowie einen mit dieser in Serie geschalteten kapazitiven Energiespeicher CES. Die Schaltanordnung SA ist dabei mit dem ersten Spannungspotenzial UP1 des Gleichspannungszwischenkreises ZK verbunden, während der kapazitive Energiespeicher CES mit dem zweiten Spannungspotenzial UP2 des Gleichspannungszwischenkreises ZK verbunden ist. Die Anordnung der beiden Komponenten SA, CES der Saugkreisanordnung SKA sowie deren Verbindung mit den Spannungspotenzialen UP1, UP2 des Gleichspannungszwischenkreises ZK ist dabei beispielhaft gewählt.

Die alternative Saugkreisanordnung SKA der FIG 3B umfasst demgegenüber zwei parallel geschaltete Schaltanordnungen SA1, SA2 sowie wiederum einen mit diesen in Serie geschalteten gemeinsamen kapazitiven Energiespeicher CES. Die weitere alternative Saugkreisanordnung SKA der FIG 3C umfasst eine Mehrzahl parallel geschalteter Schaltanordnungen SA1 bis SAn und wiederum einen mit diesen in Serie geschalteten gemeinsamen kapazitiven Energiespeicher CES. Eine Parallelschaltung mehrerer Schaltanordnungen SA entsprechend den FIG 3B und 3C ermöglicht eine Skalierung der Leistungsfähigkeit der Saugkreisanordnung SKA, wobei die Schaltanordnungen SA bzw. deren Schalteinheiten SE beispielsweise zeitlich versetzt bzw. phasenversetzt von der Steuereinrichtung ST gesteuert werden können. Ergänzend umfasst die Saugkreisanordnung SKA der FIG 3C ferner eine Schutzeinheit PR, welche parallel zu den Schaltanordnungen SA1 bis SAn geschaltet ist. Eine solche Schutzeinheit PR umfassen vorzugsweise auch die Saugkreisanordnungen SKA der FIG 3A und 3B.

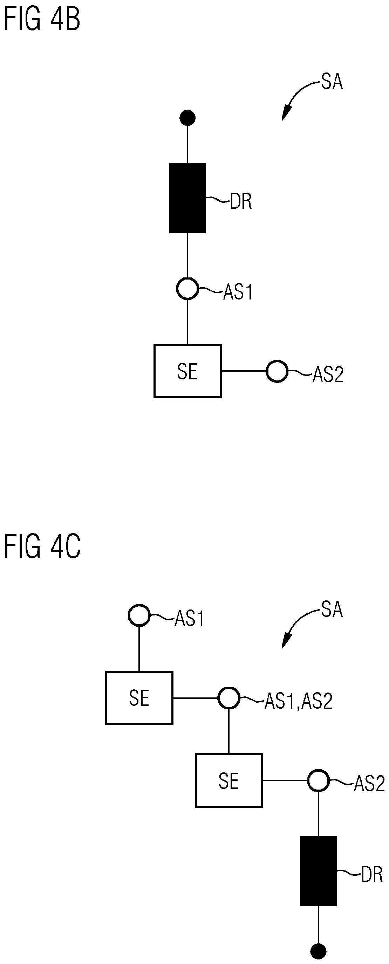

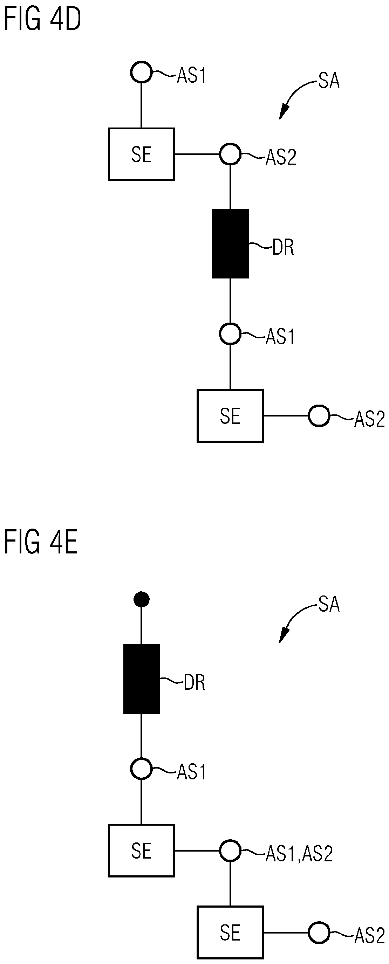

FIG 4 zeigt beispielhafte alternative Ausgestaltungen einer Schaltanordnung SA der erfindungsgemäßen Saugkreisanordnung SKA. Die alternativen Schaltanordnungen SA der FIG 4A und 4B umfassen dabei jeweils eine Schalteinheit SE mit einem ersten Anschluss AS1, einem zweiten Anschluss AS2 sowie eine mit der Schalteinheit SE in Serie geschaltete Induktivität DR. Wie FIG 4A und 4B verdeutlichen, kann die Induktivität DR aufgrund der Serienschaltung alternativ mit dem ersten Anschluss AS1, entsprechend der FIG 4A, oder dem zweiten Anschluss AS2, entsprechend der FIG 4B, der Schalteinheit SE verbunden werden.

Die alternativen Ausgestaltungen der Schaltanordnung SA der FIG 4C, 4D und 4C umfassen demgegenüber jeweils zwei in Serie geschaltete Schalteinheiten SE, wobei die Induktivität DR wiederum aufgrund der Serienschaltung alternativ mit dem zweiten Anschluss AS2 der zweiten bzw. in der Darstellung unteren Schalteinheit SE, entsprechend der FIG 4C, oder mit dem zweiten Anschluss AS2 der ersten bzw. oberen Schalteinheit SE sowie dem ersten Anschluss AS1 der zweiten bzw. unteren Schalteinheit SE, entsprechend der FIG 4D, oder mit dem ersten Anschluss AS1 der ersten bzw. oberen Schalteinheit SE, entsprechend der FIG 4E, verbunden werden kann.

Entsprechende Schaltanordnungen SA mit jeweils mehr als zwei in Serie geschalteten Schalteinheiten SE und/oder mehr als einer Induktivität sind ebenso möglich.

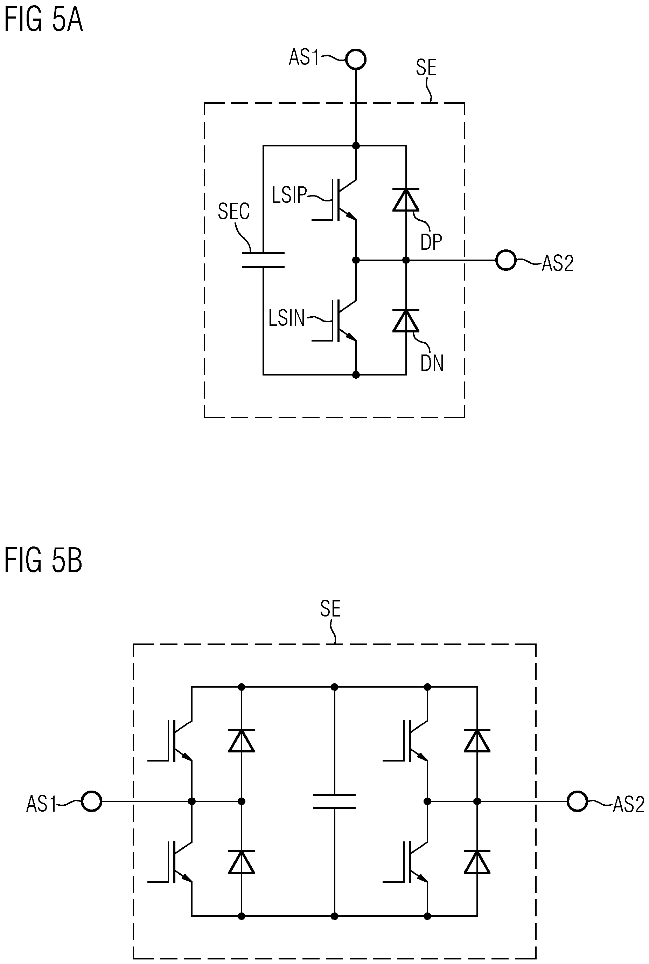

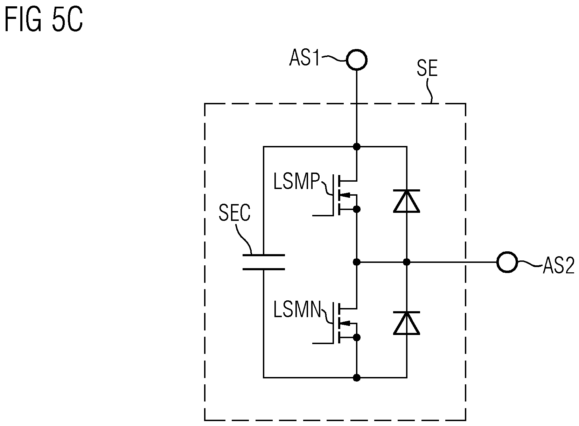

FIG 5 zeigt beispielhafte alternative Ausgestaltungen einer Schalteinheit SE einer Schaltanordnung SA der erfindungsgemäßen Saugkreisanordnung SKA. Die Schalteinheit SE der FIG 5A umfasst dabei eine Halbbrücke mit zwei Leistungshalbleiterschaltern LSIP, LSIN, welche jeweils als ein IGBT hergestellt aus einem Silizium-Halbleitermaterial ausgestaltet sind. Die Leistungshalbleiterschalter LSIP, LSIN weisen, insbesondere abhängig von der Zwischenkreisspannung UZK sowie der Anzahl in Serie geschalteter Schalteinheiten SE der Schaltanordnung SA, eine nominelle Sperrspannungsfestigkeit von beispielsweise 1,2 kV, 1,7 kV, 2,3 kV, 3,3 kV, 4,5 kV oder 6,5 kV auf. Schaltstellungen der Leistungshalbleiterschalter LSIP, LSIN werden von der Steuereinrichtung ST mit einer Schaltfrequenz, die einem Vielfachen der doppelten Frequenz des Versorgungsnetzes entspricht, gesteuert. Abhängig von der jeweiligen Schaltstellung kann an den Anschlüssen AS1, AS2 der Schalteinheit SE eine Spannung von null Volt oder eine der Spannung an der Schalteinheitskapazität SEC der Schalteinheit SE entsprechende Spannung anliegen. Der erste Anschluss AS1 der Schalteinheit SE ist dabei mit einem äußeren Anschluss der Halbbrücke bzw. des oberen Leistungshalbleiterschalter LSIP verbunden, während der zweite Anschluss AS2 der Schalteinheit SE mit dem Mittenanschluss der Halbbrücke verbunden ist.

Jedem der Leistungshalbleiterschalter LSIP, LSIN ist eine antiparallel geschaltete Diode DP, DN bzw. Freilaufdiode zugeordnet. Die parallel zu der Halbbrücke geschaltete Schalteinheitskapazität SEC ist beispielsweise als ein Folien- oder Elektrolytkondensator ausgestaltet. Für eine Erhöhung der Kapazität der Schalteinheitskapazität SEC können beispielsweise auch mehrere solcher Kondensatoren oder alternativ ergänzend Doppelschichtkondensatoren oder Batteriezellen parallel geschaltet werden.

Die alternative Ausgestaltung der Schalteinrichtung SE der FIG 5B umfasst gesamt vier zu einer Vollbrücke verschaltete Leistungshalbleiterschalter, wobei zumindest zwei Leistungshalbleiterschalter zu einer jeweiligen Halbbrücke verschaltet sind, und zwei Halbbrücken sowie die zumindest eine Schalteinheitskapazität parallel geschaltet sind. Jedem Leistungshalbleiterschalter ist wiederum eine antiparallel geschaltete Diode bzw. Freilaufdiode zugeordnet. Der erste Anschluss AS1 der Schalteinheit SE ist mit dem Mittenanschluss der linken der beiden Halbbrücken und der zweite Anschluss AS2 der Schalteinheit SE mit dem Mittenanschluss der rechten der beiden Halbbrücken verbunden.

Die alternative Ausgestaltung der Schalteinrichtung SE der FIG 5C umfasst wiederum eine Halbbrücke entsprechend der FIG 5A, jedoch mit dem Unterschied, dass die Leistungshalbleiterschalter LSMP, LSMN jeweils als ein MOSFET hergestellt aus einem Siliziumkarbid-Halbleitermaterial ausgestaltet sind. Die jeweils antiparallel geschalteten Dioden können intrinsisch in dem jeweiligen MOSFET enthalten sein, alternativ können diese jedoch ebenso als separate Bauelemente verwirklicht sein.

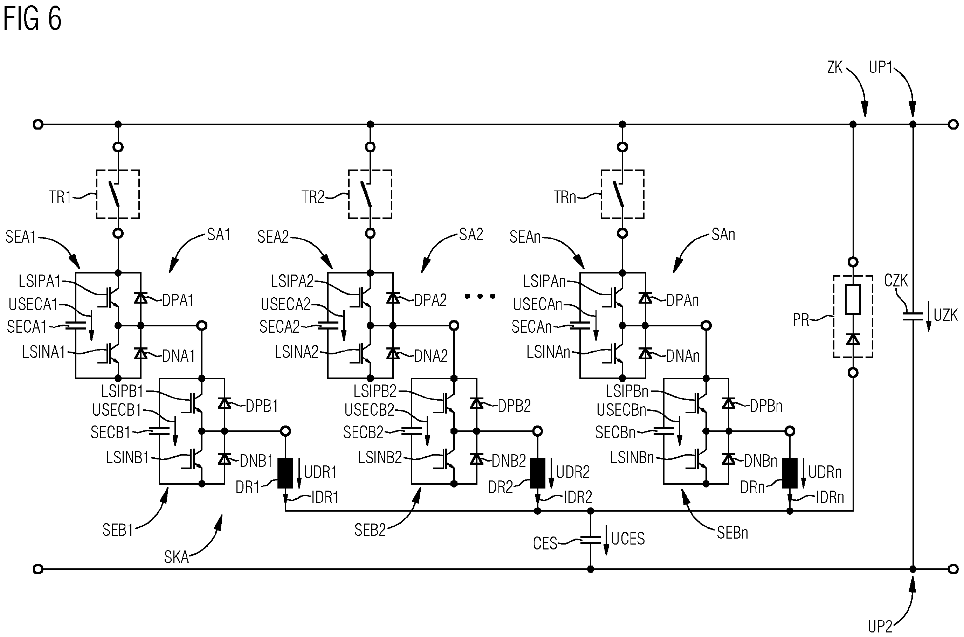

FIG 6 zeigt eine erfindungsgemäße Saugkreisanordnung SKA in einem Gleichspannungszwischenkreis ZK. Die Saugkreisanordnung SKA umfasst eine Anzahl n parallel geschalteter Schaltanordnungen SAq, mit q = 1, 2, ..., n, sowie einen mit diesen in Serie geschalteten kapazitiven Energiespeicher CES, wobei der kapazitive Energiespeicher CES entsprechend vorstehender Beschreibung insbesondere mehrere parallel geschaltete Kondensatoren umfassen kann. Jede der Schaltanordnung SAq umfasst zwei in Serie geschaltete Schalteinheiten SEpq, mit p = A oder B, sowie eine mit den jeweiligen Schalteinheiten SEpq in Serie geschaltete Induktivität DRq. Die Schalteinheiten SEpq umfassen dabei entsprechend der FIG 5A eine jeweilige Halbbrücke mit zwei jeweils als IGBT ausgestaltete Leistungshalbleiterschaltern LSIPpq, LSINpq sowie zu diesen antiparallel geschaltete Freilaufdioden DPpq. Ferner umfassen die Schalteinheiten SEpq jeweils eine zu der Halbbrücke parallel geschaltete Schalteinheitskapazität SECpq. Bei einer Zwischenkreisspannung UZK in einem Bereich zwischen typischerweise 1,2 kV und 2,2 kV weisen die Leistungshalbleiterschalter LSIPpq, LSINpq eine Sperrspannungsfestigkeit von beispielsweise 1,2 kV oder 1,7 kV, und die Schalteinheitskapazitäten SECpq einer Spannungsfestigkeit im Bereich zwischen 700 V und 1,2 kV auf.

Ergänzend umfasst die Saugkreisanordnung SKA der FIG 6 einen mit einer jeweiligen Schaltanordnung SAq in Serie geschalteten Schalter TRq. Diese Schalter TRq sind beispielsweise als ein jeweiliger Leistungsschalter oder Trennschalter ausgestaltet, und ermöglichen die Trennung einer jeweiligen Schaltanordnung SAq von dem Gleichspannungszwischenkreis ZK. Bei Auftreten eines Fehlerfalls beispielsweise in einer Komponente der ersten Schaltanordnung SA1 kann dadurch der Betrieb der Saugkreisanordnung SKA mit den weiteren Schaltanordnungen SA2 bis SAn fortgesetzt werden. Ferner umfasst die Saugkreisanordnung SKA eine zu den Schaltanordnungen SAq parallel geschaltete Schutzeinheit PR, um einen beispielsweise aufgrund eines Kurzschlusses in dem Gleichspannungszwischenkreis ZK bzw. eines Zusammenbruchs der Zwischenkreisspannung und eines dadurch hervorgerufenen Entladens der Zwischenkreiskapazität auftretenden Stoßstrom insbesondere an den Freilaufdioden DPpq, DNpq der Schalteinheiten SEpq vorbeizuführen. Die Schutzeinheit PR umfasst beispielsweise eine Serienschaltung aus einer Netzdiode und einem Widerstand, insbesondere mit einem ohmschen Widerstand zwischen 2 und 200 Milliohm.

Nach der FIG 6 wird ein erstes Spannungspotenzial UP1 des Gleichspannungszwischenkreises ZK als positiv, ein zweites Spannungspotenzial UP2 als negativ angenommen. Ein Strom IDRq durch eine Induktivität DRq ist positiv, wenn er aus Richtung des positiven ersten Spannungspotenzials UP1 in Richtung des negativen zweiten Spannungspotenzials UP2 des Gleichspannungszwischenkreises ZK fließt. Ebenso ist eine Spannung UDRq an einer Induktivität DRq positiv, wenn diese von dem positiven ersten Spannungspotenzial UP1 zu dem negativen zweiten Spannungspotenzial UP2 orientiert ist, und ist eine Spannung USECpq and einer Schaltkapazität SEpq positiv, wenn diese von dem ersten Anschluss AS1 zu dem zweiten Anschluss AS2 der Schalteinheit SEpq orientiert ist.

Folgende Tabelle A zeigt von der in FIG 6 nicht dargestellten Steuereinrichtung ST gesteuerte Schaltzustände der vier Leistungshalbleiterschalter LSIPpq, LSINpq der beiden Schalteinheiten SEAq, SEBq einer Schaltanordnung SAq, sowie einen für eine jeweilige Kombination von Schaltzuständen korrespondierenden Zustand. Der Schaltzustand 1 bezeichnet dabei ein Durchlassen, während der Schaltzustand 0 ein Sperren bezeichnet.

**Tabelle A**

| Zustand | Schaltzustand | | | |
|---|---|---|---|---|
| | LSIPAq | LSINAq | LSIPBq | LSINBq |
| Z1q | 1 | 0 | 1 | 0 |
| Z2Aq | 0 | 1 | 1 | 0 |
| Z2Bq | 1 | 0 | 0 | 1 |
| Z3q | 0 | 1 | 0 | 1 |

Wird keiner der Leistungshalbleiterschalter LSIPpq, LSINpq einer Schalteinheit SEpq eingeschaltet und fließt ein positiver Strom IDRq ungleich null durch die Induktivität DRq, wird die Diode DNpq leitfähig, was einen gleichen Effekt wie das Einschalten des Leistungshalbleiterschalters LSINpq hat. Fließt ein negativer Strom IDRq ungleich null durch die Induktivität DRq, wird entsprechend die Diode DPpq leitfähig, was den gleichen Effekt wie das Einschalten des Leistungshalbleiterschalters LSIPpq hat.

Die Tabelle B zeigt eine aus dem gewählten Zustand resultierende Spannung UDRq an der Induktivität DRq einer Schaltanordnung SAq sowie eine entsprechende Auswirkung auf die Spannung USECAq, USECBq an den Schalteinheitskapazitäten SECAq, SECBq der beiden Schalteinheiten SEAq, SEBq abhängig von der Richtung des Stroms IDRq durch die Induktivität DRq.

**Tabelle B**

| Zustand | UDRq | Auswirkung | |
|---|---|---|---|
| | | IDRq < 0 | IDRq > 0 |
| Z1q | UZK - UCES | keine Änderung | keine Änderung |
| Z2Aq | UZK - UCES - USECAq | Entladen SECAq | Aufladen SECAq |
| Z2Bq | UZK - UCES - USECBq | Entladen SECBq | Aufladen SECBq |
| Z3q | UZK - UCES - USECAq - USECBq | Entladen SECAq + SECBq | Aufladen SECAq + SECBq |

Werden die Spannungen USECAq, USECBq an den Schalteinheitskapazitäten SECAq, SECBq der beiden Schalteinheiten SEAq, SEBq der Schaltanordnung SAq als gleich bzw. nur um wenige Volt oder Prozentpunkte unterschiedlich betrachtet, können beide mit USECCq bezeichnet werden. Um einen Zustand gleicher Spannungen USECAq, USECBq an den Schalteinheitskapazitäten SECAq, SECBq zu erhalten, wird mit der gewählten Schaltfrequenz zwischen den Zuständen Z1q und Z2pq oder zwischen Z3q und Z2pq hin und her gewechselt. Der Zustand Z2pq ergibt sich dabei entsprechend folgender Tabelle C. Nach dieser Tabelle wird der Zustand gewählt, welcher die Spannungen USECAq, USECBq an den Schalteinheitskapazitäten einander annähert.

**Tabelle C**

| | IDRq < 0 | | IDRq > 0 | |
|---|---|---|---|---|
| Zustand für | USECAq < USECBq | USECAq > USECBq | USECAq < USECBq | USECAq > USECBq |
| Z2pq | Z2Bq | Z2Aq | Z2Aq | Z2Bq |

Die folgende Tabelle D zeigt, welcher Zustand bzw. welche Schaltzustandskombination gewählt wird, um eine positive oder negative Spannung UDRq an der Induktivität DRq der Schaltanordnung SAq einzustellen.

**Tabelle D**

| Bedingung für UZK | |
|---|---|
| UZK > UCES + (2 * USECCq) | kein Schalten, Aufladen von CES und SECpq über DNpq |
| UCES + (2 * USECCq) > UZK > UCES + USECCq | Schalten zwischen Z1q und Z2pq |
| UCES + USECCq > UZK > UCES | Schalten zwischen Z3q und Z2pq |
| UZK < UCES | kein Schalten, Entladen von CES über PR und DPpq |

Für die zweite Bedingung der Tabelle D, UCES + (2 * USECCq) > UZK > UCES, resultieren die Schaltzustände in einem Ansteigen oder Abfallen des Stroms IDRq durch die Induktivität DRq. Durch eine geeignete Wahl des Tastgrads der Schaltzustände durch die Steuereinrichtung kann ein Verlauf des Stroms IDRq entsprechend einem gewünschten Sollwert beeinflusst werden.

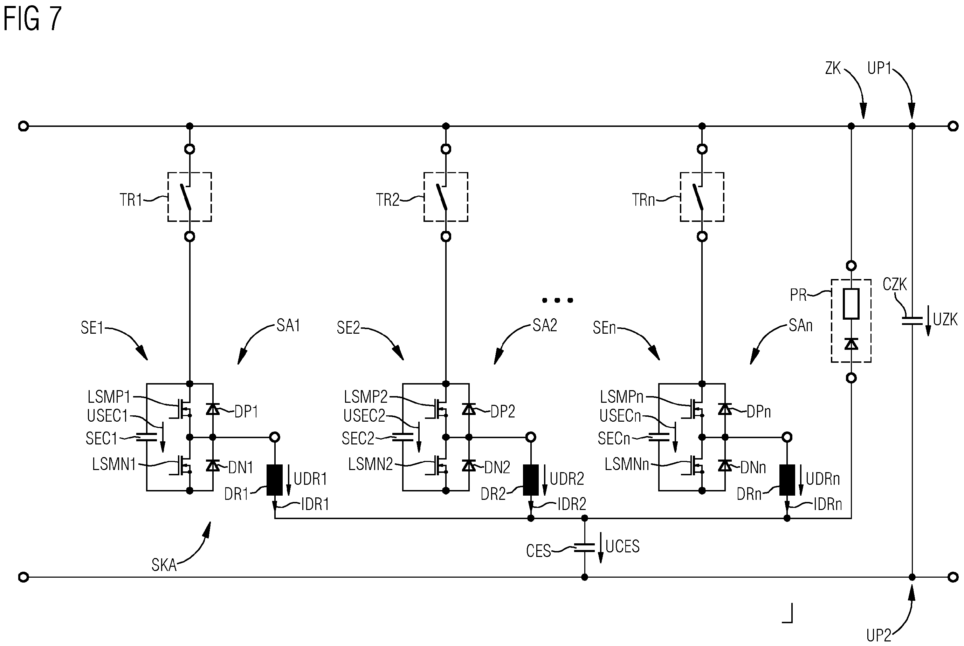

FIG 7 zeigt eine alternative erfindungsgemäße Saugkreisanordnung SKA in einem Gleichspannungszwischenkreis ZK. Die Saugkreisanordnung SKA umfasst wiederum eine Anzahl n parallel geschalteter Schaltanordnungen SAq, mit q = 1, 2, ..., n, sowie einen mit diesen in Serie geschalteten kapazitiven Energiespeicher CES. Im Unterschied zu der Saugkreisanordnung SKA der FIG 6 umfasst jede der Schaltanordnungen SAq lediglich eine Schalteinheit SEq sowie eine mit der jeweiligen Schalteinheit SEq in Serie geschaltete Induktivität DRq. Die Schalteinheiten SEq umfassen dabei entsprechend der FIG 5C eine jeweilige Halbbrücke mit zwei jeweils als MOSFET ausgestaltete Leistungshalbleiterschaltern LSMPq, LSMNq sowie zu diesen antiparallel geschaltete Freilaufdioden DPq, DNq. Die Freilaufdioden können dabei als intrinsisch in dem MOSFET enthaltene und/oder als separate Bauelemente ausgebildet sein. Ferner umfassen die Schalteinheiten SEq jeweils eine zu der Halbbrücke parallel geschaltete Schalteinheitskapazität SECq. Bei einer Zwischenkreisspannung UZK in einem Bereich zwischen typischerweise 1,2 kV und 2,2 kV weisen die Leistungshalbleiterschalter LSMPq, LSMNq eine Sperrspannungsfestigkeit von beispielsweise in dem Bereich zwischen 1,2 kV und 3,3 kV, und die Schalteinheitskapazitäten SECq einer Spannungsfestigkeit im Bereich zwischen 700 V und 1,6 kV auf.

Entsprechend der Saugkreisanordnung der FIG 6 umfasst die Saugkreisanordnung SKA der FIG 7 mit einer jeweiligen Schaltanordnung SAq in Serie geschaltete Schalter TRq. Diese Schalter TRq sind beispielsweise als ein jeweiliger Leistungsschalter oder Trennschalter ausgestaltet, und ermöglichen die Trennung einer jeweiligen Schaltanordnung SAq von dem Gleichspannungszwischenkreis ZK. Bei Auftreten eines Fehlerfalls beispielsweise in einer Komponente der ersten Schaltanordnung SA1 kann dadurch der Betrieb der Saugkreisanordnung SKA mit den weiteren Schaltanordnungen SA2 bis SAn fortgesetzt werden. Ferner umfasst die Saugkreisanordnung SKA wiederum eine zu den Schaltanordnungen SAq parallel geschaltete Schutzeinheit PR, um einen beispielsweise aufgrund eines Kurzschlusses in dem Gleichspannungszwischenkreis ZK auftretenden Stoßstrom an den Freilaufdioden DPq der Schalteinheiten SEq vorbeizuführen. Die Schutzeinheit PR umfasst beispielsweise eine Serienschaltung aus einer Netzdiode und einem Widerstand, insbesondere mit einem ohmschen Widerstand zwischen 2 und 200 Milliohm.

Die Steuerung der Leistungshalbleiterschalter LSMPq, LSMNq der Schalteinrichtung SEq durch die Steuereinrichtung ST entspricht weitgehend der vorstehend zu FIG 6 beschriebenen Steuerung. Da jede Schaltanordnung SAq nur eine Schalteinheit SEq aufweist, ist eine Symmetrierung der Spannungen an den Schalteinheitskapazitäten einer Schaltanordnung, wie sie in der vorstehenden Tabelle C angegeben ist, jedoch nicht erforderlich.

Folgende Tabelle E zeigt von der Steuereinrichtung ST gesteuerte Schaltzustände der beiden Leistungshalbleiterschalter LSMPq, LSMNq der Schalteinheit SEq der Schaltanordnung SAq, sowie einen für eine jeweilige Kombination von Schaltzuständen korrespondierenden Zustand. Der Schaltzustand 1 bezeichnet dabei ein Durchlassen, während der Schaltzustand 0 ein Sperren bezeichnet.

**Tabelle E**

| Zustand | Schaltzustand | |
|---|---|---|
| | LSMPq | LSMNq |
| Z1q | 1 | 0 |
| Z3q | 0 | 1 |

Die Tabelle F zeigt eine aus dem gewählten Zustand resultierende Spannung UDRq an der Induktivität DRq einer Schaltanordnung SAq sowie eine entsprechende Auswirkung auf die Spannung USECq an der Schalteinheitskapazität SECq der Schalteinheit SEq abhängig von der Richtung des Stroms IDRq durch die Induktivität DRq.

**Tabelle F**

| Zustand | UDRq | Auswirkung | |
|---|---|---|---|
| | | IDRq < 0 | IDRq > 0 |
| Z1q | UZK - UCES | keine Änderung | keine Änderung |
| Z3q | UZK - UCES - USECq | Entladen SECq | Aufladen SECq |

Wird keiner der Leistungshalbleiterschalter LSMPq, LSMNq einer Schalteinheit SEq eingeschaltet und fließt ein positiver Strom IDRq ungleich null durch die Induktivität DRq, wird die Diode DNq leitfähig, was einen gleichen Effekt wie das Einschalten des Leistungshalbleiterschalters LSMNq hat. Fließt ein negativer Strom IDRq ungleich null durch die Induktivität DRq, wird entsprechend die Diode DPq leitfähig, was den gleichen Effekt wie das Einschalten des Leistungshalbleiterschalters LSMPq hat.

Tabelle G zeigt schließlich, welcher Zustand bzw. welche Schaltzustandskombination gewählt wird, um eine positive oder negative Spannung UDRq an der Induktivität DRq der Schaltanordnung SAq einzustellen.

**Tabelle G**

| Bedingung für UZK | |
|---|---|
| UZK > UCES + USECq | kein Schalten, Aufladen von CES und SECq über DNq |
| UCES + USECq > UZK > UCES | Schalten zwischen Z1q und Z3q |
| UZK < UCES | kein Schalten, Entladen von CES über PR und DPq |

Für die zweite Bedingung der Tabelle G, UCES + USECq) > UZK > UCES, resultieren die Schaltzustände in einem Ansteigen oder Abfallen des Stroms IDRq durch die Induktivität DRq. Durch eine geeignete Wahl des Tastgrads der Schaltzustände durch die Steuereinrichtung kann ein Verlauf des Stroms IDRq entsprechend einem gewünschten Sollwert beeinflusst werden.

Neben den zu FIG 6 und 7 beschriebenen Saugkreisanordnungen SKA sind weitere Ausgestaltungen einer erfindungsgemäßen Saugkreisanordnung denkbar. Diese können insbesondere lediglich eine einzige Schaltanordnung SA mit einer oder mehreren in Serie geschalteten Schalteinheiten SE umfassen. Auch kann ein Schutz der Dioden einer Schalteinheit gegen Stoßströme in einer anderen Weise als durch eine beschriebene Schutzeinheit PR erzielt werden, beispielsweise durch eine in Serie mit einer Schalteinheit geschaltete Einheit, welche bei Überschreiten eines vorgegebenen Schwellwertes für den Strom oder einer Integration des Stroms über einen vorgegebenen Zeitraum den Stromfluss durch die Schalteinheit unterbricht und/oder den Stromfluss über einen oder mehrere Strompfade niedrigerer Impedanz an den Schalteinheiten bzw. an bestimmten Bauelementen dieser Schalteinheiten vorbei leitet.

### Bezugszeichenliste

| | |
|---|---|
| AS1, AS2 | Anschlüsse Schalteinheit |
| CES | kapazitiver Energiespeicher |
| CZK | Zwischenkreiskapazität |
| DP, DN | Diode, Freilaufdiode |
| DR | Induktivität |
| EW | Endwagen |
| EW | Endwagen |
| FR | Fahrtrichtung |
| IDRq | Strom durch Induktivität |
| LDG | Laufdrehgestell |
| LSIP, LSIN, LSMP, LSMN, LSIPpq, LSINpq, LSMPq, LSMNq | Leistungshalbleiterschalter |
| LSR | lastseitiger zweiter Stromrichter |
| MW | Mittelwagen |
| NSR | netzseitiger erster Stromrichter |
| PAN | Stromabnehmer |
| PR | Schutzeinheit |
| SA, SAq | Schaltanordnung |
| SE, SEq, SEpq | Schalteinheit |
| SEC, SECq, SECpq | Schalteinheitskapazität |
| SEN | Sensoren |
| SKA | Saugkreisanordnung |
| ST | Steuereinrichtung |
| TDG | Triebdrehgestell |
| TF | Traktionstransformationseinrichtung, Traktionstransformator |
| TM | Traktionsmotor |
| TR1-TRn | Schalter |
| TS | Traktionssystem |
| TUR | Traktionsumrichter |
| TZ | Schienenfahrzeug |
| UCES | Spannung an kapazitiven Energiespeicher |
| UDRq | Spannung an Induktivität |
| UP1, UP2 | erstes bzw. zweiten Spannungspotenzial |
| USECq, USECpq | Spannung an Schalteinheitskapazität |
| UZK | Zwischenkreisspannung |
| ZK | Gleichspannungszwischenkreis |

## Patentansprüche

1. Saugkreisanordnung (SKA) für einen Traktionsumrichter (TUR) eines Schienenfahrzeugs (TZ),
wobei der Traktionsumrichter (TUR) zumindest einen netzseitigen ersten Stromrichter (NSR), zumindest einen lastseitigen zweiten Stromrichter (LSR), einen den zumindest einen ersten Stromrichter (NSR) und den zumindest einen zweiten Stromrichter (LSR) verbindenden Gleichspannungszwischenkreis (ZK) mit einem ersten und einem zweiten Spannungspotenzial (UP1, UP2), sowie zumindest eine in dem Gleichspannungszwischenkreis (ZK) angeordnete Zwischenkreiskapazität (CZK) aufweist,
**dadurch gekennzeichnet, dass**
die in dem Gleichspannungszwischenkreis (ZK) angeordnete und parallel zu der zumindest einen Zwischenkreiskapazität (CZK) geschaltete Saugkreisanordnung (SKA) umfasst:
- zumindest eine Schaltanordnung (SA) umfassend zumindest eine Schalteinheit (SE) und zumindest eine Induktivität (DR),
wobei jede Schalteinheit (SE) zwei Anschlüsse (AS1, AS2), zumindest zwei steuerbare Leistungshalbleiterschalter (LSIP, LSIN, LSMP, LSMN) und zumindest eine Schalteinheitskapazität (SEC) umfasst und ausgestaltet ist, abhängig von Schaltstellungen der Leistungshalbleiterschalter (LSIP, LSIN, LSMP, LSMN) zumindest zwei unterschiedliche Spannungen an den Anschlüssen (AS1, AS2) bereitzustellen, und wobei die zumindest eine Induktivität (DR) mit zumindest einer Schalteinheit (SE) in Serie geschaltet ist,
- zumindest einen kapazitiven Energiespeicher (CES), wobei der zumindest eine kapazitive Energiespeicher (CES) mit der zumindest einen Schaltanordnung (SA) in Serie geschaltet ist, und
- eine Steuereinrichtung (ST), wobei die Steuereinrichtung (ST) ausgestaltet ist, zumindest die Leistungshalbleiterschalter (LSIP, LSIN, LSMP, LSMN) der zumindest einen Schalteinheit (SE) zu steuern.

2. Saugkreisanordnung (SKA) nach Anspruch 1,
**dadurch gekennzeichnet, dass**
- ein erster Anschluss (AS1) jeder Schalteinheit (SE) alternativ mit einem zweiten Anschluss (AS2) einer weiteren Schalteinheit (SE), mit dem ersten Spannungspotenzial (UP1) des Gleichspannungszwischenkreises (ZK), mit der zumindest einen Induktivität (DR) der Schaltanordnung (SA) oder mit dem kapazitiven Energiespeicher (CES) der Saugkreisanordnung (SKA) verbunden ist, und
- ein zweiter Anschluss (AS2) jeder Schalteinheit (SE) alternativ mit einem ersten Anschluss (AS1) einer weiteren Schalteinheit (SE), mit dem zweiten Spannungspotenzial (UP2) des Gleichspannungszwischenkreises (ZK), mit der zumindest einen Induktivität (DR) der Schaltanordnung (SA) oder mit dem kapazitiven Energiespeicher (CES) der Saugkreisanordnung (SKA) verbunden ist.

3. Saugkreisanordnung (SKA) nach Anspruch 1 oder 2,
**dadurch gekennzeichnet, dass**
- die Schalteinheit (SE) zumindest zwei zu einer Halbbrücke verschaltete Leistungshalbleiterschalter (LSIP, LSIN, LSMP, LSMN) umfasst und die Halbbrücke und die zumindest eine Schalteinheitskapazität (SEC) parallel geschaltet sind, und
- der erste Anschluss (AS1) der Schalteinheit (SE) mit einem äußerer Anschluss der Halbbrücke verbunden ist und der zweite Anschluss (AS2) der Schalteinheit (SE) mit einem Mittenanschluss der Halbbrücke verbunden ist.

4. Saugkreisanordnung (SKA) nach Anspruch 1 oder 2,
**dadurch gekennzeichnet, dass**
- die Schalteinheit (SE) zumindest vier zu einer Vollbrücke verschaltete Leistungshalbleiterschalter umfasst, wobei zumindest zwei Leistungshalbleiterschalter zu einer jeweiligen Halbbrücke verschaltet sind, und zwei Halbbrücken sowie die zumindest eine Schalteinheitskapazität parallel geschaltet sind, und
- der erste Anschluss (AS1) der Schalteinheit (SE) mit einem Mittenanschluss der einen der zwei Halbbrücken verbunden ist und der zweite Anschluss (AS2) der Schalteinheit (SE) mit einem Mittenanschluss der anderen der zwei Halbbrücken verbunden ist.

5. Saugkreisanordnung (SKA) nach einem der vorstehenden Ansprüche,
**dadurch gekennzeichnet, dass**
zumindest zwei Schaltanordnungen (SA) parallel geschaltet sind, und die Schaltanordnungen (SA) mit dem zumindest einen kapazitiven Energiespeicher (CES) in Serie geschaltet sind.

6. Saugkreisanordnung (SKA) nach einem der vorstehenden Ansprüche,
**dadurch gekennzeichnet, dass**
die Saugkreisanordnung (SKA) ferner umfasst:
zumindest eine Schutzeinheit (PR), wobei die zumindest eine Schutzeinheit (PR) zu der zumindest einen Schaltanordnung (SA) parallel geschaltet ist, und wobei die zumindest eine Schutzeinheit (PR) ausgestaltet ist, einen durch die Saugkreisanordnung (SKA) fließenden Stoßstrom an der zumindest einen Schaltanordnung (SA) vorbeizuleiten.

7. Saugkreisanordnung (SKA) nach einem der vorstehenden Ansprüche,
**dadurch gekennzeichnet, dass**
die Saugkreisanordnung (SKA) ferner umfasst:
zumindest einen Schalter (TR1, TR2, TRn), wobei jeder Schalter (TR1, TR2, TRn) zumindest einer Schaltanordnung (SA1, SA2, SAn) zugeordnet ist, und wobei jeder Schalter (TR1, TR2, TRn) ausgestaltet ist, einen Strompfad durch die zugeordnete Schaltanordnung (SA1, SA2, SAn), insbesondere eine Verbindung mit dem Gleichspannungszwischenkreis (ZK) oder dem kapazitiven Energiespeicher (CES), zu trennen.

8. Schienenfahrzeug (TZ), umfassend
- zumindest eine über zumindest einen Stromabnehmer (PAN) mit einem Wechselspannungs-Versorgungsnetz verbindbare Traktionstransformationseinrichtung (TF),
- zumindest einen Traktionsumrichter (TUR), welcher zumindest einen netzseitigen ersten Stromrichter (NSR), zumindest einen lastseitigen zweiten Stromrichter (LSR), einen den zumindest einen ersten Stromrichter (NSR) und den zumindest einen zweiten Stromrichter (LSR) verbindenden Gleichspannungszwischenkreis (ZK) sowie zumindest eine in dem Gleichspannungszwischenkreis (ZK) angeordnete Zwischenkreiskapazität (CZK) umfasst, und
- zumindest einen mit dem zweiten Stromrichter (LSR) verbundenen Traktionsmotor (TM),
**dadurch gekennzeichnet, dass**
- in dem Gleichspannungszwischenkreis (ZK) des jeweiligen Traktionsumrichters (TUR) eine Saugkreisanordnung (SKA) nach einem der Ansprüche 1 bis 7 angeordnet ist, und
- das Schienenfahrzeug (TZ) ferner eine Steuereinrichtung (ST) umfasst, welche ausgestaltet ist, zumindest die Leistungshalbleiterschalter (LSIP, LSIN, LSMP, LSMN) der Saugkreisanordnung (SKA) zu steuern.

9. Schienenfahrzeug (TZ) nach Anspruch 8,
**dadurch gekennzeichnet, dass**
das Schienenfahrzeug (TZ) als ein Triebzug, insbesondere für den Regional- und Fernverkehr, oder als eine Lokomotive ausgestaltet ist.

10. Schienenfahrzeug (TZ) nach Anspruch 8 oder 9,
**dadurch gekennzeichnet, dass**
der zumindest eine netzseitige erste Stromrichter (NSR) als ein selbstgeführter Pulsstromrichter, insbesondere als ein Vierquadrantensteller, und der zumindest eine lastseitige zweite Stromrichter (LSR) als ein selbstgeführter Pulsstromrichter, insbesondere als ein Pulswechselrichter, ausgestaltet sind.

11. Verfahren zum Steuern einer Saugkreisanordnung (SKA), wobei die Saugkreisanordnung (SKA) nach einem der Ansprüche 1 bis 7 ausgestaltet ist,
**dadurch gekennzeichnet, dass**
die Leistungshalbleiterschalter (LSIP, LSIN, LSMP, LSMN) der zumindest einen Schalteinheit (SE) von der Steuereinrichtung (ST) derart gesteuert werden, dass von einem mittels der Saugkreisanordnung (SKA) generierten Stromfluss eine Kompensation zumindest einer in den Gleichspannungszwischenkreis (ZK) eingeprägten Harmonischen einer Netzfrequenz bewirkt wird.

12. Verfahren nach Anspruch 11,
**dadurch gekennzeichnet, dass**
die Leistungshalbleiterschalter (LSIP, LSIN, LSMP, LSMN) von der Steuereinrichtung (ST) derart gesteuert werden, dass Zustandsgrößen, insbesondere Spannungen an der zumindest einen Schalteinheitskapazität (SEC) und Ströme (IDRq) durch die zumindest eine Induktivität (DR) der zumindest einen Schaltanordnung (SA) und Spannungen an dem zumindest einen kapazitiven Energiespeicher (CES) der Saugkreisanordnung (SKA, hinsichtlich vorgegebener Sollwerte nachgeführt werden.

13. Verfahren nach Anspruch 12,
**dadurch gekennzeichnet, dass**
sofern eine von der Steuereinrichtung (ST) bestimmte erwartete Zwischenkreisspannung (UZK) innerhalb vorgegebener Schwellenwerte liegt und/oder ein Sollstrom durch die zumindest eine Induktivität (DR) innerhalb vorgegebener Schwellenwerte liegt, von der Steuereinrichtung (ST) die Steuerung der Leistungshalbleiterschalter (LSIP, LSIN, LSMP, LSMN) ausgesetzt wird.

14. Verfahren nach einem der Ansprüche 11 bis 13,
**dadurch gekennzeichnet, dass**
bei zumindest zwei parallel geschalteten Schaltanordnungen (SA) die Leistungshalbleiterschalter (LSIP, LSIN, LSMP, LSMN) von der Steuereinrichtung (ST) derart, insbesondere phasenversetzt, ansteuert werden, dass sich Oberschwingungen von Strömen in den Schaltanordnungen (SA) zumindest teilweise aufheben.

15. Verwendung einer Saugkreisanordnung (SKA) nach einem der Ansprüche 1 bis 7 in einem Traktionsumrichter (TUR) eines Schienenfahrzeugs (TZ), oder für ein Verfahren nach einem der Ansprüche 11 bis 14.
